(19) Europäisches Patentamt
European Patent Office
Office européen des brevets

(11) **EP 4 391 342 A1**

(12) **EUROPEAN PATENT APPLICATION**
published in accordance with Art. 153(4) EPC

(43) Date of publication:
**26.06.2024 Bulletin 2024/26**

(21) Application number: **23756441.4**

(22) Date of filing: **16.02.2023**

(51) International Patent Classification (IPC):
**H02M 3/28** $^{(2006.01)}$

(52) Cooperative Patent Classification (CPC):
**H02M 3/28**

(86) International application number:
**PCT/JP2023/005450**

(87) International publication number:
**WO 2023/157916 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.02.2022  JP 2022021806**

(71) Applicant: **Nichicon Corporation
Kyoto-shi, Kyoto 604-0845 (JP)**

(72) Inventors:
• **YAMAGUCHI, Masashi
  Kyoto-shi, Kyoto 604-0845 (JP)**
• **SASAKI, Mikio
  Kyoto-shi, Kyoto 604-0845 (JP)**

(74) Representative: **Abitz & Partner
Postfach 86 01 09
81628 München (DE)**

(54) **DC/DC CONVERTER**

(57)     A DC/DC converter 1A includes a transformer 10, a primary-side switching circuit 11, a primary-side resonant circuit 12, a secondary-side rectifier circuit 13, and a control unit 14A that controls the primary-side switching circuit 11, in which the control unit 14A performs, when reducing an output of the secondary-side rectifier circuit 13 to a predetermined value or less from a first state in which all three phase differences among the respective legs of the first leg, the second leg, and the third leg of the primary-side switching circuit 11 are first phase differences, first phase shift control of simultaneously increasing two phase differences among the three phase differences and decreasing the remaining one phase difference or second phase shift control of simultaneously decreasing two phase differences among the three phase differences and increasing the remaining one phase difference.

[FIG. 1]

**EP 4 391 342 A1**

**Description**

TECHNICAL FIELD

The present invention relates to a DC/DC converter, and more particularly relates to a three-phase LLC current resonant type DC/DC converter.

BACKGROUND ART

In recent years, as the battery capacity of electric vehicles increases, the number of quick chargers for electric vehicles having a large capacity such as 100 to 200 [kW] is increasing. Thus, it is more important to reduce the size, efficiency, and cost of the power supply device used in the quick charger.

The power supply device of a quick charger includes a power supply unit including an AC/DC converter and a DC/DC converter. Conventionally, a voltage current type DC/DC converter has been used as the DC/DC converter, but in recent years, an LLC current resonant type DC/DC converter capable of being reduced in size, having high efficiency, and having low cost is used in view of the above background.

In particular, a three-phase LLC current resonant type DC/DC converter can have a larger capacity, can have high efficiency, and can suppress output ripple to about 1/10 as compared to a current resonant type DC/DC converter of single-phase full-bridge LLC method. Thus, by using the three-phase LLC current resonant type DC/DC converter, it is possible to reduce the size, weight, and cost of large components such as a capacitor and a choke coil constituting an output filter circuit.

A common problem in the LLC DC/DC converter is that the output cannot be narrowed to a sufficiently small value (for example, up to 0) only by frequency modulation control of controlling the driving frequency of the switching element at the time of a low output operation such as when the output voltage decreases or when the output current decreases.

In this regard, the intermittent operation by intermittent switching control is usually performed at the time of the low output operation, but the intermittent switching control is hard switching and increases the output ripple. Thus, there is a problem that the intermittent switching control is not suitable for charging a battery of an electric vehicle. Further, in the case of the single-phase full-bridge LLC DC/DC converter, it is possible to continuously and smoothly narrow the output to 0 by performing phase shift control between legs on two legs constituting the full-bridge circuit, but there is a problem that this control cannot be applied to the three-phase LLC DC/DC converter.

Thus, Patent Document 1 proposes a control method for avoiding discontinuous operation due to intermittent operation of the intermittent switching control by switching the driving method to the three-phase LLC method (three-phase full-bridge LLC method), a first single-phase full-bridge LLC method, a second single-phase full-bridge LLC method, a first single-phase half-bridge LLC method, and a second single-phase half-bridge LLC method according to the DC gain.

However, in the control method described in Patent Document 1, a plurality of control methods is switched, and thus control becomes complicated. In addition, switching from the three-phase LLC method to the single-phase full-bridge LLC method is performed at the same driving frequency, and thus an output power jump (instantaneous power fluctuation) due to a difference in DC gain occurs at the time of switching. Further, although the output ripple is relatively small in the three-phase LLC method, there is a problem that the output ripple increases when the three-phase LLC method is switched to the single-phase full-bridge LLC method.

Patent Document 2 proposes a three-phase CLLC current resonant type DC/DC converter in which a three-phase LLC method is made bidirectional. Also in this DC/DC converter, switching from three phases to two phases (from the three-phase LLC method to the single-phase full-bridge LLC method) is performed, but similarly to the control method described in Patent Document 1, there arises a problem that an output power jump due to a difference in DC gain occurs at the time of switching, and the output ripple increases.

Non-Patent Document 1 proposes a control method in which, in the three-phase LLC current resonant type DC/DC converter, driving of a leg of one phase is stopped during a low output operation, and remaining legs of two phases are driven to form a single-phase full-bridge LLC method. In this control method, in order to avoid an output power jump at the time of switching, control is performed in which gains (DC gains) are the same before and after switching. However, in the case of a quick charger compatible with the CHAdeMO standard, the output voltage changes in a wide range from 150 to 450 [V] by the battery voltage, and the output current also changes depending on the charging situation. Thus, it is practically difficult to perform switching control of the driving method with the same gain in this control method.

Non-Patent Document 2 proposes a control method in which, in the three-phase LLC current resonant type DC/DC converter, driving of a leg of one phase is stopped during a low output operation, and the remaining legs of two phases are driven with a phase difference of 180° to form a single-phase full-bridge LLC method. However, in this control method, the gain during three-phase driving (three-phase LLC method) is different from the gain during two-phase driving (single-phase full-bridge LLC method), and thus there is a possibility that an output power jump occurs due to a difference in gain at the time of switching. Further, in this control method, when the output voltage is high, there arises a problem that the output current cannot be reduced to a sufficiently small value even if the driving frequency is increased during three-phase driving.

PRIOR ART DOCUMENTS

PATENT DOCUMENTS

Patent Document 1: Chinese Patent No. 108988637
Patent Document 2: Chinese Patent No. 111446858

NON-PATENT DOCUMENTS

Non-Patent Document 1: Sayed Abbas Arshadi, 3 others. 'Efficiency Improvement of Three-Phase LLC Resonant Converter Using Phase Shedding'. [online]. 2017 IEEE Energy Conversion Congress and Exposition (ECCE), 1-5 Oct.2017. [retrieved on 2022-01-11]. Retrieved from the Internet: <URL:https://ieeexplore.ieee.org/document/8096666>.
Non-Patent Document 2: Sayed Abbas Arshadi, 4 others. 'Three-Phase LLC Battery Charger: Wide Regulation and Improved Light-Load Operation' [online]. IEEE Transactions on Power Electronics (Volume: 36, Issue: 2, Feb. 2021). [retrieved on 2022-01-11]. Retrieved from the Internet: <URL: https://ieeexplore.ieee.org/document/9130882>.

SUMMARY OF THE INVENTION

PROBLEMS TO BE SOLVED BY THE INVENTION

The present invention has been made in view of the above circumstances, and an object thereof is to provide a DC/DC converter of a three-phase LLC method (including a three-phase CLLC method) capable of narrowing an output without causing a discontinuous operation or an output power jump during a low output operation and without complicated control.

MEANS FOR SOLVING THE PROBLEMS

In order to solve the above problems, a DC/DC converter according to the present invention is a DC/DC converter including a transformer including a primary-side coil and a secondary-side coil, a primary-side switching circuit including a first leg, a second leg, and a third leg connected in parallel, each leg including an upper arm and a lower arm connected in series, each arm including a switching element, a primary-side resonant circuit provided between the primary-side switching circuit and the primary-side coil, the primary-side resonant circuit including a resonant coil and a resonant capacitor, a secondary-side rectifier circuit connected to the secondary-side coil, and a control unit that controls the primary-side switching circuit, the DC/DC converter performing forward power transmission from the primary-side switching circuit to the secondary-side rectifier circuit, in which the control unit performs, when reducing an output of the secondary-side rectifier circuit to a predetermined value or less from a first state in which all three phase differences among the respective legs of the first leg, the second leg, and the third leg become a first phase difference, first phase shift control of simultaneously increasing two phase differences among the three phase differences and decreasing a remaining one phase difference or second phase shift control of simultaneously decreasing two phase differences among the three phase differences and increasing a remaining one phase difference.
In the DC/DC converter, the control unit can be configured to simultaneously increase the two phase differences from 120° that is the first phase difference by the first phase shift control, and transition to a state in which both of the two phase differences become 180° that is a second phase difference.
In the DC/DC converter, in a state in which the two phase differences become the second phase difference, the control unit can be configured to perform third phase shift control among the legs to increase or decrease a phase difference between two legs having same phases among the first leg, the second leg, and the third leg and the remaining one leg, and increase the phase difference up to 360° or decrease the phase difference down to 0°.

In the DC/DC converter, in a state in which the two phase differences become the second phase difference, the control unit can be configured to stop one of the two legs having the same phases among the first leg, the second leg, and the third leg and drive the other leg.

In the DC/DC converter, the control unit can be configured to simultaneously decrease the two phase differences from 120° that is the first phase difference by the second phase shift control, and transition to a state in which both of the two phase differences become 0° that is a third phase difference.

In the DC/DC converter, the secondary-side rectifier circuit can be configured to include a secondary-side switching circuit including a fourth leg, a fifth leg, and a sixth leg connected in parallel, each leg including an upper arm and a lower arm connected in series, each arm including a switching element, and a secondary-side resonant circuit provided between the secondary-side switching circuit and the secondary-side coil and including a resonant coil and a resonant capacitor, and during reverse power transmission from the secondary-side switching circuit to the primary-side switching circuit, the control unit can be configured to control the secondary-side switching circuit, and when reducing an output of the primary-side switching circuit to a predetermined value or less from a second state in which all three phase differences among the respective legs of the fourth leg, the fifth leg, and the sixth leg become the first phase difference, the control unit can be configured to perform fourth phase shift control of simultaneously increasing two phase differences among the three phase differences and decreasing a remaining one phase difference or fifth phase shift control of simultaneously decreasing two phase differences among the three phase differences and increasing a remaining one phase difference.

In the DC/DC converter, the control unit can be configured to perform, when a driving frequency of the primary-side switching circuit is less than a predetermined first frequency, frequency modulation control to increase or decrease the driving frequency according to an output of the secondary-side rectifier circuit, and calculate, when the driving frequency is equal to or higher than the first frequency, a phase shift amount by multiplying a difference between the driving frequency and the first frequency by a predetermined gain, calculate the two phase differences on the basis of the phase shift amount, and perform the first phase shift control or the second phase shift control.

In the DC/DC converter, the control unit can be configured to perform duty control simultaneously with the second phase shift control, and set, during the duty control, an on-duty of each of the first leg, the second leg, and the third leg to be between a value obtained by multiplying a first on-duty that is an on-duty when being in the first state by a ratio of the two phase differences to the second phase difference and a value obtained by multiplying the first on-duty by a ratio of the two phase differences to the first phase difference.

In the DC/DC converter, the control unit can be configured to set, during the duty control, an on-duty of two legs of the first leg, the second leg, and the third leg to a value obtained by multiplying the first on-duty by the ratio of the two phase differences to the first phase difference, and an on-duty of a remaining one of the first leg, the second leg, and the third leg to a value obtained by multiplying the first on-duty by the ratio of the two phase differences to the second phase difference.

In the DC/DC converter, the control unit can be configured to perform, when a driving frequency of the primary-side switching circuit is less than a predetermined threshold, frequency modulation control to increase or decrease the driving frequency according to an output of the secondary-side rectifier circuit, and perform the second phase shift control and the duty control with the driving frequency fixed to the threshold when the driving frequency is equal to or higher than the threshold.

In the DC/DC converter, the control unit can be configured to perform, when a driving frequency of the primary-side switching circuit is less than a predetermined first frequency, frequency modulation control to increase or decrease the driving frequency according to an output of the secondary-side rectifier circuit, and calculate, when the driving frequency is equal to or higher than the first frequency, a phase shift amount by multiplying a difference between the driving frequency and the first frequency by a predetermined gain, calculate the two phase differences on the basis of the phase shift amount, calculate each of the on-duties on the basis of the two phase differences, and perform the second phase shift control and the duty control.

EFFECT OF THE INVENTION

According to the present invention, it is possible to provide a three-phase LLC DC/DC converter capable of narrowing the output without causing a discontinuous operation or an output power jump during a low output operation.

BRIEF DESCRIPTION OF THE DRAWINGS

Fig. 1 is an example of a circuit diagram of a DC/DC converter according to a first embodiment.
Fig. 2 is an example of a diagram illustrating a phase difference between legs of the DC/DC converter according to the first embodiment.

Fig. 3 is an example of a control flow diagram at a time of transition to a low output operation state of the DC/DC converter according to the first embodiment.

Fig. 4 is an example of diagrams illustrating control timings at a time of transition to the low output operation state of the DC/DC converter according to the first embodiment.

Fig. 5 is an example of current path diagrams in the low output operation state of the DC/DC converter according to the first embodiment.

Fig. 6 is an example of current vector diagrams at a time of transition to the low output operation state of the DC/DC converter according to the first embodiment.

Fig. 7 is an example of diagrams illustrating control timing in the low output operation state of the DC/DC converter according to the first embodiment.

Fig. 8 is an example of a circuit diagram of the DC/DC converter according to the first embodiment after transition to a single-phase full-bridge LLC method.

Fig. 9 is an example of a circuit diagram of a DC/DC converter according to a second embodiment.

Fig. 10 is an example of diagrams illustrating control timings at a time of reverse power transmission of the DC/DC converter according to the second embodiment.

Fig. 11 is an example of a circuit diagram of a DC/DC converter according to a third embodiment.

Fig. 12 is an example of diagrams illustrating control timings at a time of transition to the low output operation state of the DC/DC converter according to the third embodiment.

Fig. 13 is an example of current path diagrams of the DC/DC converter according to the third embodiment.

Fig. 14 is an example of current path diagrams of the DC/DC converter according to the third embodiment.

Fig. 15 is an example of a circuit diagram of a DC/DC converter according to a fourth embodiment.

Fig. 16 is a diagram illustrating a relationship between phase differences and duties of the DC/DC converter according to the fourth embodiment.

Fig. 17 is an example of a diagram illustrating control timings at a time of frequency modulation control of the DC/DC converter according to the fourth embodiment.

Fig. 18 is an example of a diagram illustrating control timings at a time of phase shift control ($\theta1 = \theta2 = 105°$) of the DC/DC converter according to the fourth embodiment.

Fig. 19 is an example of a diagram illustrating control timings at a time of the phase shift control ($\theta1 = \theta2 = 90°$) of the DC/DC converter according to the fourth embodiment.

Fig. 20 is an example of a diagram illustrating control timings at a time of the phase shift control ($\theta1 = \theta2 = 45°$) of the DC/DC converter according to the fourth embodiment.

Fig. 21 is an example of a diagram illustrating control timings at a time of phase shift control ($\theta1 = \theta2 = 105°$) of a DC/DC converter according to a comparative example.

Fig. 22 is an example of a control flow diagram of the DC/DC converter according to the fourth embodiment.

Fig. 23 is an example of a circuit diagram of a DC/DC converter according to a fifth embodiment.

Fig. 24 is an example of a diagram illustrating a frequency two-phase phase shift duty conversion control block of the DC/DC converter according to the fifth embodiment.

Fig. 25 is an example of a control flow diagram of the DC/DC converter according to the fifth embodiment.

Fig. 26 is an example of a circuit diagram of a DC/DC converter according to a sixth embodiment.

Fig. 27 is a diagram illustrating a modification of a relationship between phase differences and duties of the DC/DC converter according to the fourth embodiment.

MODE FOR CARRYING OUT THE INVENTION

Hereinafter, embodiments of a DC/DC converter according to the present invention will be described with reference to the accompanying drawings.

[First embodiment]

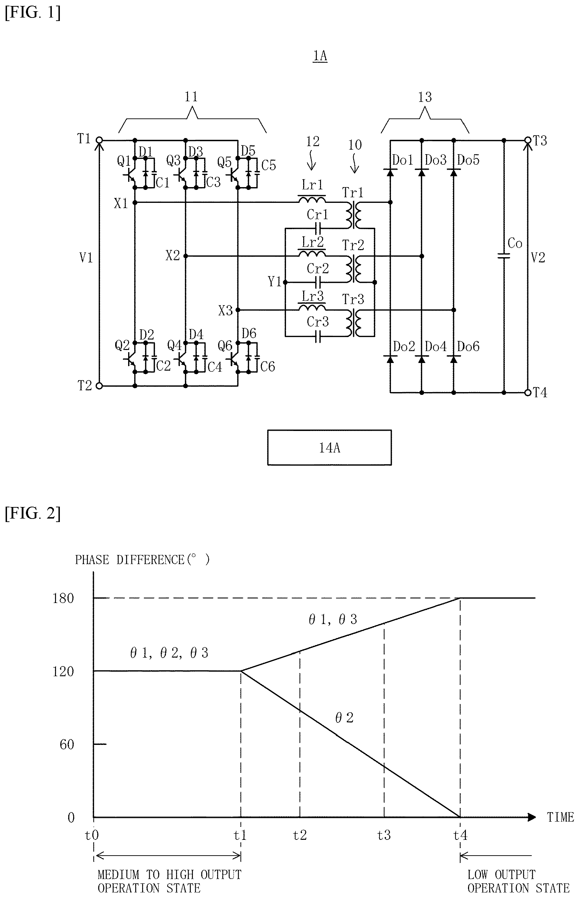

Fig. 1 illustrates a DC/DC converter 1A according to a first embodiment of the present invention. The DC/DC converter 1A is a three-phase LLC current resonant type DC/DC converter, and includes terminals T1 to T4.

An AC/DC converter (which may include a PFC circuit) for converting an AC voltage into a DC voltage is connected to a preceding stage of the terminals T1 and T2, and a load (for example, an electric vehicle battery or resistive load) is connected to the terminals T3 and T4. The DC/DC converter 1A performs forward power transmission from the terminals T1 and T2 to the terminals T3 and T4. ADC voltage V1 is input to the terminals T1 and T2, and a DC voltage V2 and a DC current to be supplied to the load is output from the terminals T3 and T4.

The DC/DC converter 1A includes a transformer 10, a primary-side circuit including a primary-side switching circuit 11 and a primary-side resonant circuit 12, a secondary-side circuit including a secondary-side rectifier circuit 13 and a capacitor Co, a control unit 14A (a drive unit of the primary-side switching circuit 11, and wiring is not illustrated), and various detection circuits (not illustrated). Note that the various detection circuits detect a voltage value, a current value, and the like necessary for control of the control unit 14A.

The transformer 10 is a high-frequency isolated transformer, and includes a first-phase transformer Tr1, a second-phase transformer Tr2, and a third-phase transformer Tr3. A primary-side coils of the transformers Tr1 to Tr3 are connected to the primary-side switching circuit 11 via the primary-side resonant circuit 12. A secondary-side coils of the transformers Tr1 to Tr3 have one ends connected to the secondary-side rectifier circuit 13 and the other ends connected to each other to form a neutral point. Note that the transformers Tr1 to Tr3 of the respective phases may be constituted by a plurality of transformers, or the transformer 10 may be constituted by one transformer having three phases. Note that excitation coils of the transformers Tr1 to Tr3 are not illustrated as being included in the primary-side coil of the transformer.

The primary-side switching circuit 11 includes a first leg of a first phase, a second leg of a second phase, and a third leg of a third phase connected in parallel, and each leg includes an upper arm and a lower arm connected in series. The upper arm of the first leg includes a switching element Q1, a diode D1, and a capacitor C1. Similarly, the lower arm of the first leg includes a switching element Q2, a diode D2, and a capacitor C2, the upper arm of the second leg includes a switching element Q3, a diode D3, and a capacitor C3, the lower arm of the second leg includes a switching element Q4, a diode D4, and a capacitor C4, the upper arm of the third leg includes a switching element Q5, a diode D5, and a capacitor C5, and the lower arm of the third leg includes a switching element Q6, a diode D6, and a capacitor C6. The diodes D1 to D6 are reverse contact diodes for reflux, and the capacitors C1 to C6 are partial resonant capacitors for soft switching.

As the switching element Q1, for example, a power semiconductor switching element capable of switching at a high frequency, such as an insulated gate bipolar transistor (IGBT) and a metal oxide semiconductor field effect transistor (MOSFET) using silicon carbide (SiC) or gallium nitride (GaN), can be used. The same applies to the switching elements Q2 to Q6.

The diode D1 is a reverse contact diode for reflux, and is connected in parallel in the reverse direction to a current path of the switching element Q1. The diode D1 may be a parasitic diode of the switching element Q1, an external diode independent of the switching element Q1, or both. The same applies to the diodes D2 to D6.

The capacitor C1 is a capacitor for partial resonance, and is connected in parallel to the current path of the switching element Q1 and the diode D1. The capacitor C1 may be a parasitic capacitor of the switching element Q1, an external capacitor independent of the switching element Q1, or both of them. The same applies to the capacitors C2 to C6.

The primary-side resonant circuit 12 includes resonant coils Lr1 to Lr3 and resonant capacitors Cr1 to Cr3. One end of the resonant coil Lr1 is connected to the connection point X1 of the switching elements Q1 and Q2 of the first leg, and the other end is connected to one end of the resonant capacitor Cr1 via the primary-side coil of the transformer Tr1. One end of the resonant coil Lr2 is connected to the connection point X2 of the switching elements Q3 and Q4 of the second leg, and the other end is connected to one end of the resonant capacitor Cr2 via the primary-side coil of the transformer Tr2. One end of the resonant coil Lr3 is connected to the connection point X3 of the switching elements Q5 and Q6 of the third leg, and the other end is connected to one end of the resonant capacitor Cr3 via the primary-side coil of the transformer Tr3. The other ends of the resonant capacitors Cr1 to Cr3 are connected to each other to constitute a neutral point Y1.

The positions of the resonant coil Lr1 and the resonant capacitor Cr1 may be switched, or both the resonant coil Lr1 and the resonant capacitor Cr1 may be disposed on one end side or the other end side of the primary-side coil of the transformer Tr1. The same applies to the resonant coil Lr2 and the resonant capacitor Cr2, and the resonant coil Lr3 and the resonant capacitor Cr3. Note that the primary-side of the transformer 10 is Y-connected, but may be Δ-connected or Δ-Cr connected, and the secondary-side is also Y-connected, but may be Δ-connected. Note that the Δ-Cr connection is, for example, a connection in a configuration in which the other ends of the primary-side coils of the transformers Tr1, Tr2, and Tr3 are connected to each other, the resonant capacitor Cr1 is interposed between the other end of the primary-side coil of the transformer Tr1 and the other end of the primary-side coil of the transformer Tr2, the resonant capacitor Cr2 is interposed between the other end of the primary-side coil of the transformer Tr2 and the other end of the primary-side coil of the transformer Tr3, and the resonant capacitor Cr3 is interposed between the other end of the primary-side coil of the transformer Tr3 and the other end of the primary-side coil of the transformer Tr1.

The secondary-side rectifier circuit 13 is a three-phase full-bridge rectifier circuit including rectifier diodes Do1 to Do6, and performs diode bridge rectification. The secondary-side rectifier circuit 13 only needs to be a rectifier circuit, and may be a synchronous rectifier circuit using a switching element. The synchronous rectifier circuit is, for example, a three-phase full bridge connection of power semiconductor switching elements. Each switching element is turned on/off by, for example, synchronous rectification control.

The capacitor Co is a capacitor for removing output ripple, and is connected between the terminals T3 and T4.

The control unit 14A includes respective drive units of the switching elements Q1 to Q6 for turning on/off the switching elements Q1 to Q6, and a control circuit for sending a control signal to the drive units. The control unit 14A may be constituted by an analog circuit, a digital circuit using a microcontroller, a DSP, an FPGA, or the like, or a circuit combining an analog circuit and a digital circuit.

The control unit 14A controls phase differences among the first leg of the first phase, the second leg of the second phase, and the third leg of the third phase while controlling driving frequencies of the switching elements Q1 to Q6 according to an output operation state. Specifically, the control unit 14A performs frequency modulation control and phase shift control on the switching elements Q1 to Q6.

Fig. 2 illustrates a phase difference among the legs of the primary-side switching circuit 11. Hereinafter, a phase difference between the first leg and the second leg is $\theta 1$, a phase difference between the second leg and the third leg is $\theta 2$, and a phase difference between the third leg and the first leg is $\theta 3$. For example, in the case of $\theta 1 = \theta 2 = \theta 3 = 120°$, each of the phase differences at an on-timing among the switching elements Q1, Q3, and Q5 is 120°, and each of the phase differences at an off-timing is also 120°. Similarly, each of the phase differences at an on-timing among the switching elements Q2, Q4, and Q6 is 120°, and each of the phase differences at an off-timing is also 120°.

Time $t_0$ to time $t_1$ is a time zone in which the DC/DC converter 1A is in a medium to high output operation state (normal driving state in three phases). At this time, the control unit 14A performs the frequency modulation control without performing the phase shift control. The control unit 14A at the time of the frequency modulation control fixes each of the phase differences $\theta 1$, $\theta 2$, and $\theta 3$ to 120° (corresponding to a "first phase difference" of the present invention), and controls the driving frequencies of the switching elements Q1 to Q6 so that an output value (for example, an output power value) of the DC/DC converter 1A approaches a target value (for example, a target power value). In this case, in a region where the driving frequency is larger than a resonance frequency, the control unit 14A decreases the driving frequency when the output value is smaller than the target value, and increases the driving frequency when the output value is larger than the target value.

Time $t_1$ to time $t_4$ is a time zone when the DC/DC converter 1A transitions to a low output operation state. At this time, the control unit 14A starts the phase shift control at time $t_1$. The control unit 14A at the time of the phase shift control simultaneously gradually increases the phase differences $\theta 1$ and $\theta 3$ from 120° and gradually decreases the phase difference $\theta 2$ from 120° so that the phase difference $\theta 2$ becomes 360° - $\theta 1$ - $\theta 3$, and sets the phase differences $\theta 1$ and $\theta 3$ to 180° (corresponding to "second phase difference" of the present invention) and the phase difference $\theta 2$ to 0° at time $t_4$ (corresponding to "first phase shift control" of the present invention). Note that it is preferable that the phase differences $\theta 1$ and $\theta 3$ are simultaneously changed at the same ratio. In addition, a combination of the two phase differences is arbitrary, and may be $\theta 1$ and $\theta 2$ or $\theta 2$ and $\theta 3$.

After time $t_4$ is a time zone when the DC/DC converter 1A is in the low output operation state. At this time, the control unit 14A controls the switching elements Q1 to Q6 by the frequency modulation control so that the phase differences $\theta 1$ and $\theta 3$ are maintained at 180° and the phase difference $\theta 2$ is maintained at 0°. Further, the DC/DC converter 1A at this time is a pseudo single-phase full-bridge LLC DC/DC converter in which the second leg and the third leg operate (pseudo two-phase operation) with a phase difference of 180° with respect to the first leg.

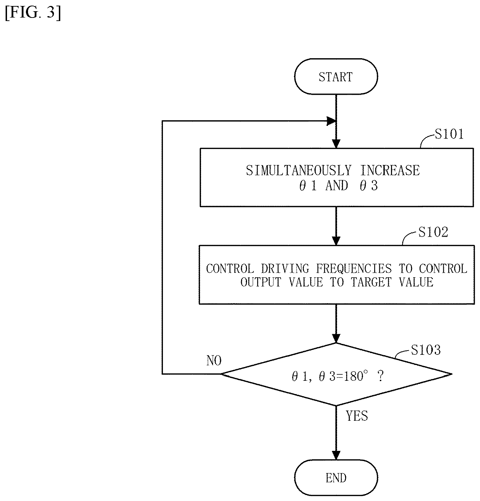

Fig. 3 illustrates a control flow of the control unit 14A at the time of transition to the low output operation state (time $t_1$ to time $t_4$ in Fig. 2).

The control unit 14A before the time $t_1$ performs the frequency modulation control and increases the driving frequency in order to lower the output value to the target value. The control unit 14A sufficiently increases the driving frequency so that the driving frequencies of the switching elements Q1 to Q6 become high frequencies equal to or higher than about 1.5 times the resonance frequency of the primary-side resonant circuit 12 at time $t_1$. This is preferable from the viewpoint of reducing ripple generated during and after the transition to the low output operation state.

At time ti, the control unit 14A detects a decrease in the output voltage and/or the output current, and when detecting that the DC/DC converter 1A has a low output gain, the control unit 14A starts transition control to the low output operation state (frequency modulation control and phase shift control). The control unit 14A that has started the transition control simultaneously gradually increases the phase differences $\theta 1$ and $\theta 3$ from 120° (S101). Thus, the phase difference $\theta 2$ gradually decreases.

The state of the driving current flowing through the current path of the switching elements Q1 to Q6 changes due to a change in the phase differences $\theta 1$, $\theta 2$, and $\theta 3$, and thus the control unit 14A controls the driving frequencies of the switching elements Q1 to Q6 so that the output value (for example, the output power value) becomes a predetermined target value (for example, the target power value) (S102). That is, when the phase differences $\theta 1$ and $\theta 3$ gradually increase from 120° and the phase difference $\theta 2$ gradually decreases, the combined current obtained by combining three-phase driving currents gradually decreases. However, the three-phase combined current does not change in proportion to the change in the phase differences $\theta 1$, $\theta 2$, and $\theta 3$, and thus the control unit 14A controls the driving frequencies of the switching elements Q1 to Q6 so that the output value (for example, the output power value) decreases via a predetermined target value (for example, the target power value). For example, the control unit 14A decreases the driving frequency in a case where the output power value is excessively lower than the target power value, and increases the driving frequency in a case where the output power value is not lowered to the target power value. The control unit 14A performs such frequency modulation control to smoothly change the output in the transition time zone between the three-phase operation and the pseudo two-phase operation.

Next, the control unit 14A determines whether or not the phase differences θ1 and θ3 have reached 180° (S103), and when they have not (NO in S103), the control unit 14A returns to the processing of S101 and repeats the processing of S101 to S103. When the phase differences θ1 and θ3 have reached 180° (YES in S103), the control unit 14A ends the transition control to the low output operation state.

As described above, since the control unit 14A at the time of the transition control simultaneously controls the driving frequency (frequency modulation control) while controlling the phase differences θ1 and θ3 (phase shift control), even if the state of the driving currents of the switching elements Q1 to Q6 changes due to the change in the phase differences θ1, θ2, and θ3, smooth output control can be performed. As a result, the DC/DC converter 1A can change the circuit topology from the three-phase LLC method to the pseudo single-phase full-bridge LLC method and smoothly transition to the low output operation state without causing a discontinuous operation or an output power jump.

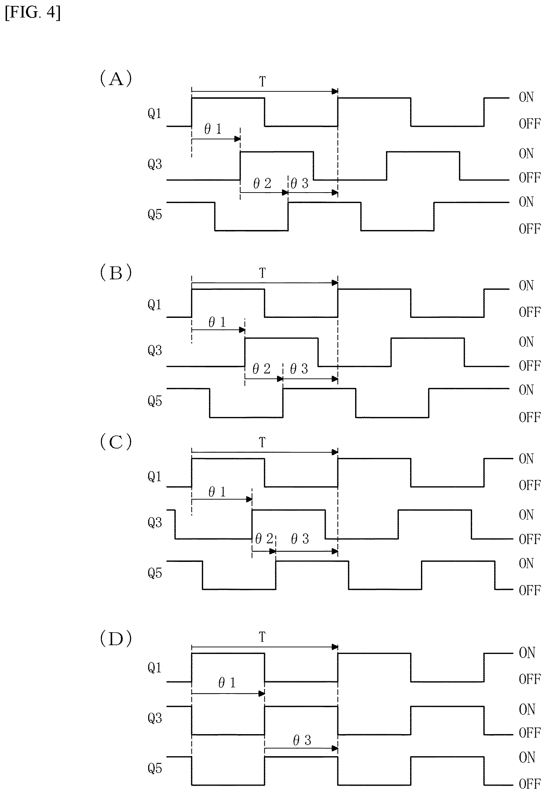

Fig. 4 illustrates control timings of the DC/DC converter 1A at the time of transition from the medium to high output operation state to the low output operation state. T in the drawing is a switching cycle of the switching element Q1. Control timings of the switching elements Q2, Q4, and Q6 of the lower arms of the respective legs and control timings of the switching elements Q1, Q3, and Q5 of the upper arms of the respective legs are opposite to each other (phase difference: 180°) by providing dead times, and thus descriptions thereof are omitted. Further, the duty of each of the switching elements Q1, Q3, and Q5 is 50% (corresponding to "first on-duty" of the present invention) (strictly speaking, the on-duty decreases from 50% by the dead time).

Fig. 4(A) illustrates a control timing at time $t_1$ in Fig. 2. At time ti, the phase differences θ1, θ2, and θ3 are all 120°. Fig. 4(B) illustrates a control timing at time $t_2$ in Fig. 2, and Fig. 4(C) illustrates a control timing at time $t_3$ in Fig. 2. From these drawings, it can be seen that the phase differences θ1 and θ3 gradually increase from 120° (the phase difference θ2 gradually decreases from 120°), and the control timings of the switching element Q3 and the switching element Q5 gradually come close.

Fig. 4(D) illustrates a control timing at time $t_4$ in Fig. 2. As can be seen from the drawing, the phase differences θ1 and θ3 are 180° (phase difference θ2 is 0°), the control timings of the switching element Q3 and the switching element Q5 are the same, and the control timings are opposite to the control timing of the switching element Q1 (phase difference 180°). That is, the DC/DC converter 1A performs a low output operation as the pseudo single-phase full-bridge LLC method.

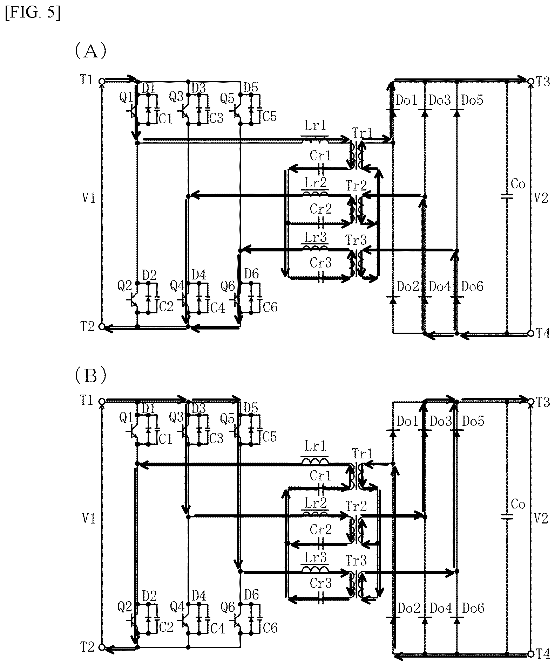

Fig. 5 illustrates current paths of the DC/DC converter 1A in the low output operation state at the control timing of Fig. 4(D). Fig. 5(A) is a current path when the switching element Q1 is in an on state and the switching elements Q3 and Q5 are in an off state, and Fig. 5(B) is a current path when the switching element Q1 is in an off state and the switching elements Q3 and Q5 are in an on state. Note that description of current paths at the time of switching of the switching elements Q1, Q3, and Q5 (turn-on and turn-off) is omitted.

As can be seen from Figs. 5(A) and 5(B), the DC/DC converter 1A is different from the conventional single-phase full-bridge LLC DC/DC converter in which the driving of the leg of one phase is stopped. That is, the DC/DC converter 1A becomes a pseudo single-phase full-bridge LLC DC/DC converter in which the second leg of the second phase and the third leg of the third phase operate with a phase difference of 180° with respect to the first leg of the first phase while performing the three-phase equilibrium operation without stopping the driving of the leg of one phase.

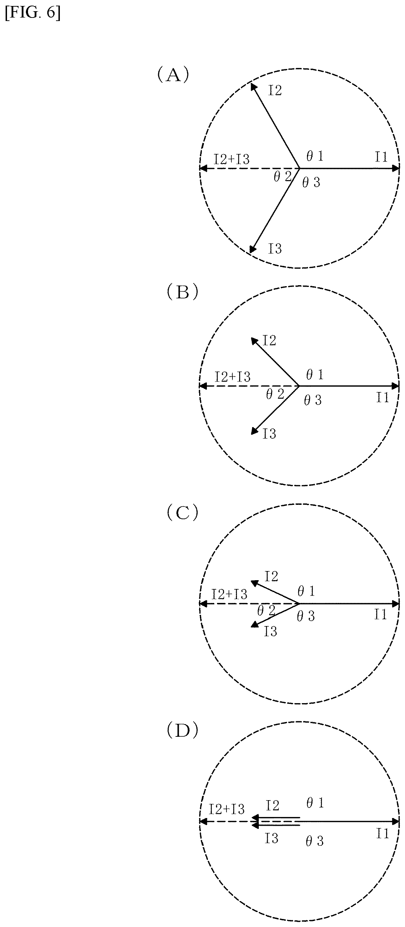

Fig. 6 illustrates a current vector I1 of the first phase, a current vector I2 of the second phase, and a current vector I3 of the third phase at the time of transition to the low output operation state (time $t_1$ to time $t_4$ in Fig. 2). Fig. 6(A) is a current vector diagram at time ti, Fig. 6(B) is a current vector diagram at time $t_2$, Fig. 6(C) is a current vector diagram at time $t_3$, and Fig. 6(D) is a current vector diagram at time $t_4$.

As can be seen from Figs. 6(A) to 6(D), in the DC/DC converter 1A, the legs of the three phases operate even at the time of transition to the low output operation state, so that the currents of the respective phases at the neutral point are maintained in equilibrium, and the sum of the current vectors I1, I2, and I3 is 0 even during changes in the phase differences θ1, θ2, and θ3. The case of transition from the medium to high output operation state to the low output operation state has been described above. In the case of transition from the low output operation state to the medium to high output operation state, by performing the operation opposite to the above, the DC/DC converter 1A can smoothly transition to the medium to high output operation state by changing the circuit topology from the pseudo single-phase full-bridge LLC method to the three-phase LLC method without causing a discontinuous operation or an output power jump as in the case of transition from the medium to high output operation state to the low output operation state.

Next, a method of smoothly narrowing the output current to 0 in the low output operation state, that is, in the pseudo single-phase full-bridge LLC method will be described.

In general, when the circuit topology transitions from the three-phase LLC method to the pseudo single-phase full-bridge LLC method, the output gain decreases, so that it is possible to cope with low output. However, in the pseudo single-phase full-bridge LLC method, similarly to the single-phase full-bridge LLC method, the output decreases when the driving frequency is higher than the resonance frequency, but the ratio of the output decrease to the increase in the driving frequency decreases as the driving frequency increases. Further, when the input voltage or the output voltage is high, the output cannot be sufficiently lowered even if the driving frequency is sufficiently increased, and when the driving frequency is increased, the loss of the switching element, the coil, and the transformer increases, so that the driving frequency cannot be unnecessarily increased.

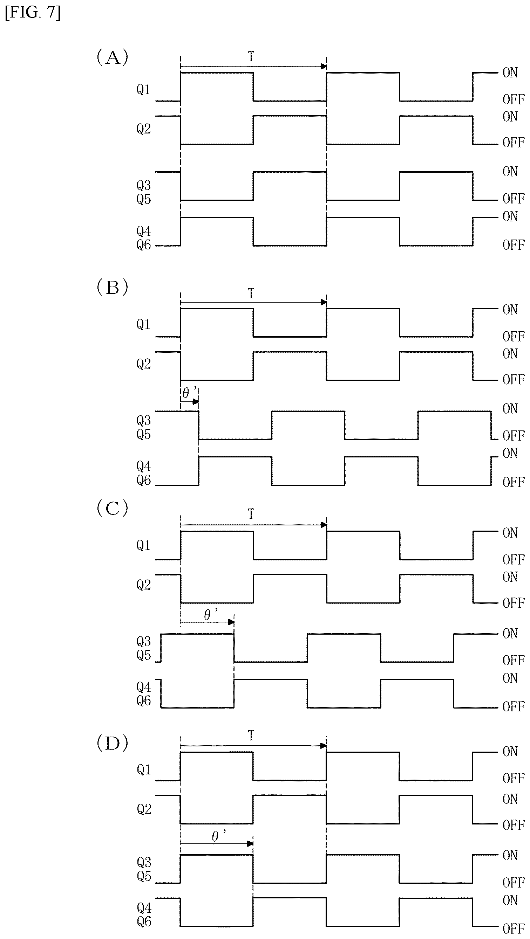

Thus, in the DC/DC converter 1A, the phase shift control among the legs (corresponding to the "third phase shift control" of the present invention) is executed in order to cope with further low output in the pseudo single-phase full-bridge LLC method after time $t_4$ in Fig. 2. Fig. 7 illustrates control timings of the phase shift control between legs.

Fig. 7(A) illustrates a control timing at time $t_4$ in Fig. 2 which is the same as that in Fig. 4(D). In Fig. 7(A), the control timing of the switching elements Q3 and Q5 with respect to the switching element Q1 has a phase difference of 180°. That is, the phase differences θ1 and θ3 are 180°, and the phase difference θ2 is 0°.

Figs. 7(B) and 7(C) illustrate control timings at the time of the phase shift control among the legs after time $t_4$. In Figs. 7(B) and 7(C), the control timing of the switching elements Q3 and Q5 with respect to the switching element Q1 is further delayed by a phase shift amount θ' [°] than the phase difference of 180°. That is, the control timing of the switching elements Q3 and Q5 with respect to the switching element Q1 increases to 180° + θ'. The phase shift amount θ' in Fig. 7(C) is larger than the phase shift amount θ' in Fig. 7(B).

As the phase shift amount θ' increases, a period in which the switching elements Q4 and Q6 are turned on during the on-period of the switching element Q1 (simultaneous on-period of switching elements Q1, Q4, and Q6) decreases. When the simultaneous on-period becomes shorter, the period during which the resonance current flows becomes shorter, and the forward transmission power decreases.

Fig. 7(D) illustrates a control timing when the output current is reduced to zero by the phase shift control among the legs. In Fig. 7(D), the phase difference between the control timing of the switching element Q1 and the control timings of the switching elements Q3 and Q5 is 360° (phase shift amount θ' = 180°). In Fig. 7(D), a period in which the switching elements Q4 and Q6 are turned on during the on-period of the switching element Q1 (simultaneous on-period) is 0, and there is no period in which the resonance current flows, so that the forward transmission power is not generated. That is, the output current becomes 0.

In the DC/DC converter 1A according to the present embodiment, in the case of transition to the low output operation state, the phase differences θ1 and θ3 are simultaneously increased from 120° to 180° (the phase difference θ2 is decreased from 120° to 0°) by the phase shift control while performing output power control (frequency modulation control) in a state where the driving frequencies of the switching elements Q1 to Q6 are sufficiently increased (for example, a state where the driving frequencies are set to high frequencies equal to or higher than about 1.5 times the resonance frequency of the primary-side resonant circuit 12). That is, the control unit 14A simultaneously increases two phase differences (in the above example, the phase difference θ1 between the first leg and the second leg and the phase difference θ3 between the first leg and the third leg) between a certain phase and the other two phases from 120° to 180°, and decreases the phase difference between the other two phases (in the above example, the phase difference θ2 between the second leg and the third leg) from 120° to 0° so that the sum of the three phase differences θ1, θ2, and θ3 becomes 360°. As a result, in the DC/DC converter 1A, the circuit topology is changed from the three-phase LLC method to the pseudo single-phase full-bridge LLC method without causing a discontinuous operation or an output power jump without complicated control, and the DC/DC converter 1A can smoothly transition to the low output operation state.

Furthermore, in the DC/DC converter 1A, while performing the output power control (frequency modulation control) in the pseudo single-phase full-bridge LLC method after transition to the low output operation state, the two phase differences (in the above example, the phase difference θ1 between the first leg and the second leg and the phase difference θ3 between the first leg and the third leg) between a certain phase and the other two phases is changed from 180° by the phase shift control among the legs, and the phase difference between the other two phases (in the above example, the phase difference θ2 between the second leg and the third leg) is maintained at 0°. As a result, in the DC/DC converter 1A, the transmission power can be smoothly reduced in the low output operation state, and the output current can be reduced to zero.

Note that, as the phase shift control (third phase shift control) among the legs, according to a combination of two phase differences between a certain phase and the other two phases with the first phase shift control, the phase shift control between the second leg and the first leg or the third leg may be performed, or the phase shift control between the third leg and the first leg or the second leg may be performed. In Fig. 7, as the phase shift control among the legs, the control timing of the switching elements Q3 and Q5 with respect to the switching element Q1 is increased from 180° by +θ', the phase shift amount θ' is set to +180° (360° in total), and the current is reduced to 0. However, the phase shift amount θ' may be decreased from 180° by -θ' and the phase shift amount θ' may be set to -180° (0° in total), and the current may be reduced to 0. That is, each of the two phase differences between a certain phase and the other two phases may be increased to a maximum of 360° or may be decreased to a minimum of 0°.

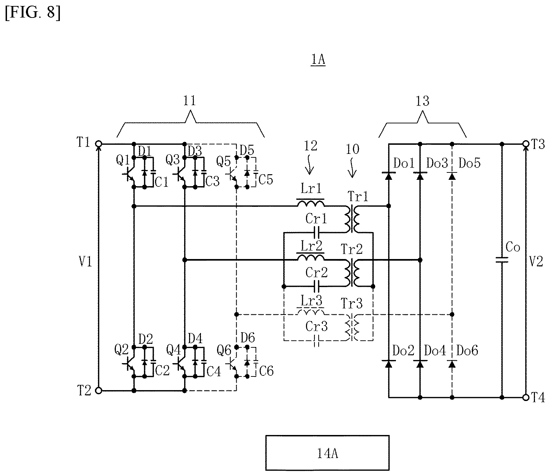

As illustrated in Fig. 8, the DC/DC converter 1A may transition to the pseudo single-phase full-bridge LLC method that is the low output operation state at time $t_4$ in Fig. 2, then stop one leg, for example, the third leg, out of the second leg or the third leg having the same phase (set the switching elements Q5 and Q6 to continuously off state), and transition to the single-phase full-bridge LLC method using the first leg (switching elements Q1 and Q2) and the second leg (switching elements Q3 and Q4). The pseudo single-phase full-bridge LLC method and the single-phase full-bridge LLC method have the same circuit topology, and thus smooth transition is possible.

Even in the case of transition to the single-phase full-bridge LLC method, it is possible to smoothly reduce the transmission power and to narrow the output current to 0 by performing the phase shift control (in the above example, the phase shift control of the second leg with respect to the first leg) of the remaining one of the other two phases in which one phase is stopped with respect to a certain phase while performing the output power control (frequency modulation control). In the single-phase full-bridge LLC method, the number of switching elements is reduced from six to four as compared with the pseudo single-phase full-bridge LLC method. Thus, loss is reduced during a low output operation, and power conversion efficiency during the low output operation is improved.

[Second embodiment]

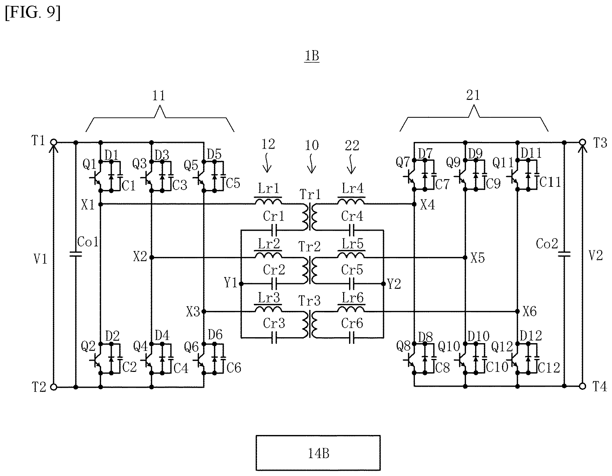

Fig. 9 illustrates a DC/DC converter 1B according to a second embodiment of the present invention. The DC/DC converter 1B is a three-phase CLLC current resonant type DC/DC converter, and performs bidirectional power transmission (forward power transmission and reverse power transmission). Note that the present circuit configuration may be referred to as a three-phase CLLLC method including excitation inductance.

The DC/DC converter 1B includes a transformer 10, a primary-side circuit including a primary-side switching circuit 11, a primary-side resonant circuit 12, and a capacitor Co1 that serve as a drive circuit during forward power transmission, a secondary-side circuit including a secondary-side switching circuit 21, a secondary-side resonant circuit 22, and a capacitor Co2 that serve as a drive circuit during reverse power transmission, a control unit 14B, and various detection circuits (not illustrated).

The transformer 10, the primary-side switching circuit 11, and the primary-side resonant circuit 12 have the same configurations as those of the first embodiment. The capacitors Co1 and Co2 are capacitors for removing output ripple at the time of the reverse power transmission and the forward power transmission, respectively.

The secondary-side switching circuit 21 has the same configuration as the primary-side switching circuit 11, includes a fourth leg of a first phase, a fifth leg of a second phase, and a sixth leg of a third phase connected in parallel, and each leg includes an upper arm and a lower arm connected in series. The upper arms of the respective legs include switching elements Q7, Q9, and Q11, diodes D7, D9, and D11, and capacitors C7, C9, and C11. Similarly, the lower arms of the respective legs include switching elements Q8, Q10, and Q12, diodes D8, D10, and D12, and capacitors C8, C10, and C12.

The secondary-side resonant circuit 22 has the same configuration as the primary-side resonant circuit 12, and includes resonant coils Lr4 to Lr6 and resonant capacitors Cr4 to Cr6. One ends of the resonant coils Lr4 to Lr6 are connected to one ends of the secondary-side coils of the transformers Tr1 to Tr3, and the other ends are connected to connection points X4 to X6 of the secondary-side switching circuit 21. One ends of the resonant capacitors Cr4 to Cr6 are connected to the other ends of the secondary-side coils of the transformers Tr1 to Tr3. The other ends of the resonant capacitors Cr4 to Cr6 are connected to each other to constitute a neutral point Y2. Note that the primary-side and the secondary-side of the transformer 10 are Y-connected, but may be Δ-connected or Δ-Cr connected.

The control unit 14B has the same configuration as the control unit 14A of the first embodiment, and performs control at the time of the forward power transmission from the terminals T1 and T2 side to the terminals T3 and T4 side and control at the time of the reverse power transmission from the terminals T3 and T4 to the terminals T1 and T2.

In order to simplify the description, it is assumed that the control unit 14B at the time of the forward power transmission does not perform the synchronous rectification control on the secondary-side switching circuit 21, turns off the switching elements Q7 to Q12, and performs diode bridge rectification control by the diodes D7 to D12. As a result, the control during the forward power transmission is the same as that in the first embodiment.

Similarly, the control unit 14B at the time of the reverse power transmission does not perform the synchronous rectification control on the primary-side switching circuit 11, turns off the switching elements Q1 to Q6, and performs the diode bridge rectification control by the diodes D1 to D6.

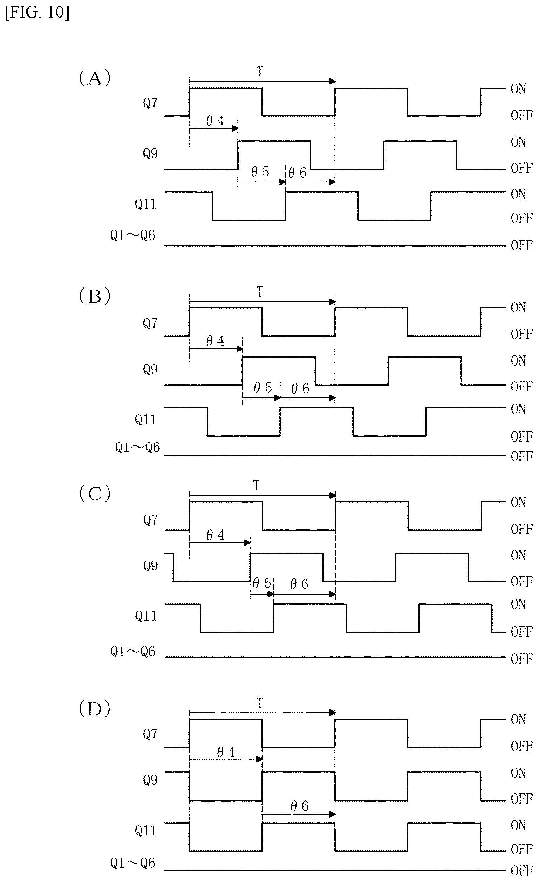

Fig. 10 illustrates control timings of the secondary-side switching circuit 21 at the time of transition from the medium to high output operation state to the low output operation state during the reverse power transmission. Control timings of the switching elements Q8, Q10, and Q12 of the lower arms of the respective legs and control timings of the switching elements Q7, Q9, and Q11 of the upper arms of the respective legs are opposite to each other (phase difference: 180°) by providing dead times, and thus descriptions thereof are omitted. Further, in the drawing, T is a switching cycle of the switching element Q7, $\theta 4$ is a phase difference between the fourth leg and the fifth leg (the switching element Q7 and the switching element Q9), $\theta 5$ is a phase difference between the fifth leg and the sixth leg (the switching element Q9 and the switching element Q11), and $\theta 6$ is a phase difference between the sixth leg and the fourth leg (the switching element Q11 and the switching element Q7).

Fig. 10(A) illustrates a control timing in a case where the phase differences $\theta 4$, $\theta 5$, and $\theta 6$ are all 120°. In Fig.

10(A), the DC/DC converter 1B operates as a three-phase LLC DC/DC converter in the medium to high output operation state.

As the operation proceeds from the three-phase LLC method in Fig. 10(A) to Figs. 10(B) and 10(C), the phase differences θ4 and θ6 gradually increase at the same time from 120° (phase difference θ5 gradually decreases from 120° so as to be 360° - θ4 - θ6), and the control timings of the switching element Q9 and the switching element Q11 gradually come close. Note that it is preferable that the phase differences θ4 and θ6 are simultaneously changed at the same ratio.

Fig. 10(D) illustrates a control timing in a case where the phase differences θ4 and θ6 are 180° and the phase difference θ5 is 0°. In Fig. 10(D), the control timings of the switching element Q9 and the switching element Q11 are the same, and the control timings are opposite to the control timing of the switching element Q7 (phase difference: 180°). That is, the secondary-side switching circuit 21 of the DC/DC converter 1B performs a low output operation as the pseudo single-phase full-bridge LLC method.

In the DC/DC converter 1B according to the present embodiment, in the case of transition to the low output operation state during the reverse power transmission, the phase differences θ4 and θ6 are simultaneously and gradually increased from 120° to 180° (the phase difference θ5 is gradually decreased from 120° to 0°) by the phase shift control (corresponding to "fourth phase shift control" of the present invention) while performing the output power control (frequency modulation control) in a state where the driving frequencies of the switching elements Q7 to Q12 are sufficiently increased (for example, a state where the driving frequencies are set to high frequencies equal to or higher than about 1.5 times the resonance frequency of the secondary-side resonant circuit 22). As a result, in the DC/DC converter 1B, the circuit topology is changed from the three-phase LLC method to the pseudo single-phase full-bridge LLC method without causing a discontinuous operation or an output power jump, and the DC/DC converter 1B can smoothly transition to the low output operation state.

Further, in the DC/DC converter 1B, similarly to the first embodiment, the phase shift control (third phase shift control) between the fourth leg and the fifth leg or the sixth leg may be performed while performing the output power control (frequency modulation control) in the pseudo single-phase full-bridge LLC method after transition to the low output operation state during the reverse power transmission. By performing the phase shift control among the legs, the transmission power can be smoothly reduced in the low output operation state, and the output current can be reduced to zero. As a result, it is possible to perform smooth seamless direction switching in both directions via the output 0 (switch the power transmission direction). Note that the phase shift control among the legs may be the phase shift control between the fifth leg and the fourth leg or the sixth leg, or the phase shift control between the sixth leg and the fourth leg or the fifth leg.

[Third embodiment]

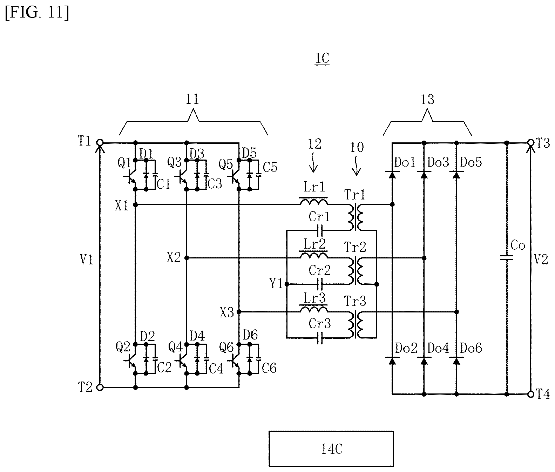

Fig. 11 illustrates a DC/DC converter 1C according to a third embodiment of the present invention. The DC/DC converter 1C has the same configuration as that of the first embodiment except for a control unit 14C. The control unit 14C has the same configuration as the control unit 14A of the first embodiment, but is different from the control unit 14A in control processing at the time of transition to the low output operation state (zero output operation state).

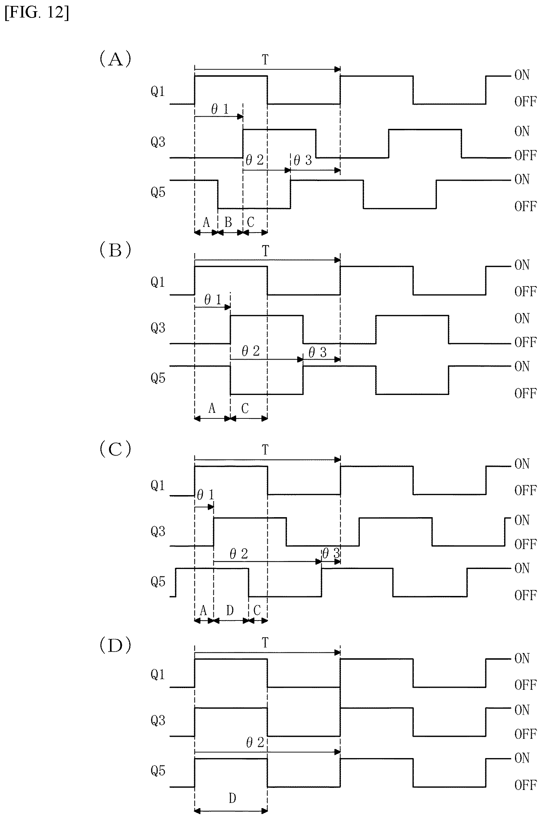

Fig. 12 illustrates control timings at the time of transition of the DC/DC converter 1C to the low output operation state. T in the drawing is a switching cycle of the switching element Q1. Control timings of the switching elements Q2, Q4, and Q6 of the lower arms of the respective legs and control timings of the switching elements Q1, Q3, and Q5 of the upper arms of the respective legs are opposite to each other (phase difference: 180°) by providing dead times, and thus descriptions thereof are omitted. Further, the duty of each of the switching elements Q1, Q3, and Q5 is 50% (strictly speaking, the on-duty decreases from 50% by the dead time).

Fig. 12(A) illustrates the control timing in the medium to high output operation state. In Fig. 12(A), the DC/DC converter 1C operates as a three-phase LLC DC/DC converter in which all the phase differences θ1, θ2, and θ3 become 120°.

Figs. 12(B) and 12(C) illustrate the control timing at the time of transition to the low output operation state (zero output operation state). In the case of transition to the low output operation state, the control unit 14C controls the phase differences θ1, θ2, and θ3 by the phase shift control (corresponding to "second phase shift control" of the present invention) while performing the output power control (frequency modulation control) in a state where the driving frequencies of the switching elements Q1 to Q6 are sufficiently increased (for example, a state where the driving frequencies are set to high frequencies equal to or higher than about 1.5 times the resonance frequency of the primary-side resonant circuit 12). Specifically, the control unit 14C performs the phase shift control of simultaneously and gradually decreasing the phase differences θ1 and θ3 from 120° (gradually increasing the phase difference θ2 from 120° to be 360° - θ1 - θ3). Note that it is preferable that the phase differences θ1 and θ3 are simultaneously changed at the same ratio. In addition, a combination of the two phase differences is arbitrary, and may be θ1 and θ2 or θ2 and θ3.

Fig. 12(D) illustrates the control timing in the zero output operation state. In Fig. 12(D), the phase differences θ1 and θ3 are 0° (corresponding to "third phase difference" of the present invention), and the phase difference θ2 is 360°. That is, the phase difference among the switching elements Q1, Q3, and Q5 is 0°, and thus the forward transmission power is not generated and the output current is 0.

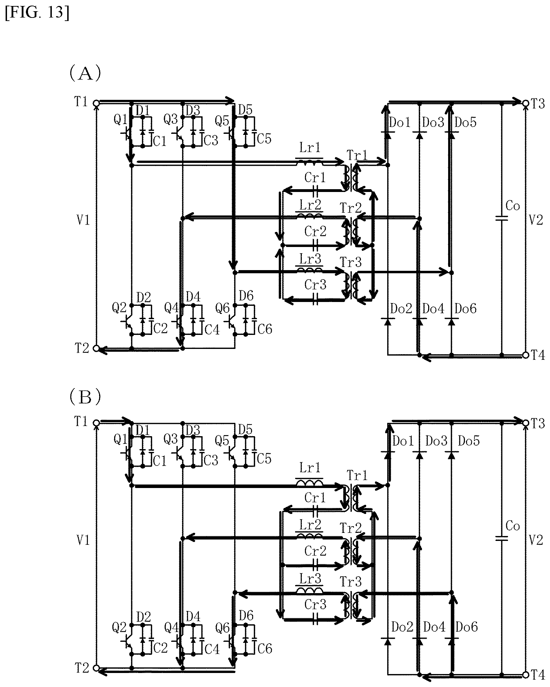

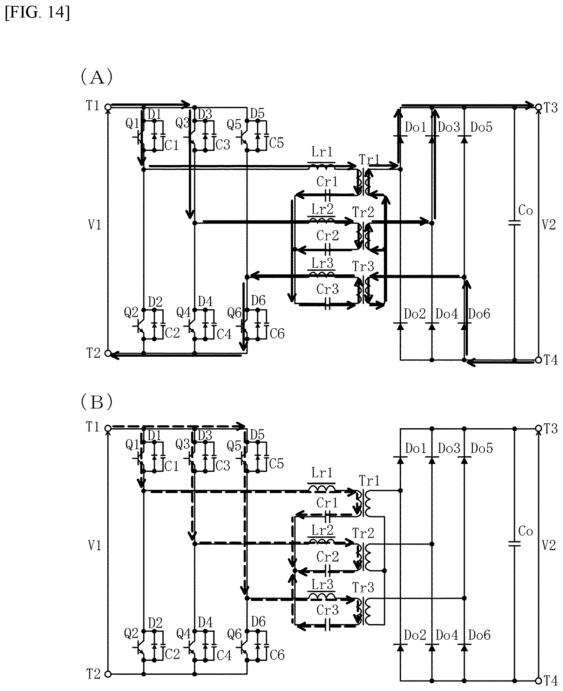

In Fig. 12(A), the on-period of the switching element Q1 is divided into three periods (Periods A, B, and C). Period A is a period in which the switching elements Q1 and Q5 are on (switching elements Q2 and Q6 are off) and the switching element Q3 is off (switching element Q4 is on). Period B is a period in which the switching element Q1 is on (switching element Q2 is off) and the switching elements Q3 and Q5 are off (switching elements Q4 and Q6 are on). Period C is a period in which the switching elements Q1 and Q3 are on (switching elements Q2 and Q4 are off) and the switching element Q5 is off (switching element Q6 is on). The current path in Period A is illustrated in Fig. 13(A), the current path in Period B is illustrated in Fig. 13(B), and the current path in Period C is illustrated in Fig. 14(A).

In the state of Fig. 12(A), Periods A, B, and C are equal in time, power is uniformly supplied to the three phases (the fourth leg to the sixth leg), and a current equally flows to the secondary-side rectifier circuit 13 in the three phases. As illustrated in Fig. 12(B), when the phase differences θ1 and θ3 become 90°, the state of Period B disappears, and there are only Periods A and C. Thereafter, as illustrated in Fig. 12(C), when the phase differences θ1 and θ3 become 45°, Period D in which the switching elements Q1, Q3, and Q5 are on (switching elements Q2, Q4, and Q6 are off) appears. The current path in the Period D is illustrated in Fig. 14(B).

In Period D, because the switching elements Q1, Q3, and Q5 are on, no resonance current flows through the primary-side switching circuit 11, and no output current (load current) flows through the secondary-side rectifier circuit 13. Thus, in the state of Fig. 12(C), the output current flows only in Periods A and C, and thus the output current decreases as compared with the states of Figs. 12(A) and 12(B). Furthermore, the ratio of decrease in the output current is proportional to the ratio of decrease in the phase differences θ1 and θ3 (increase in the phase difference θ2), and thus the output can be smoothly reduced by performing the phase shift control while performing the output power control (frequency modulation control).

As illustrated in Fig. 12(D), when the phase differences θ1 and θ3 become 0° (the phase difference θ2 becomes 360°), the period during which the switching element Q1 is on is only D, and the period (Periods A to C) during which the resonance current flows is no longer present. Thus, the output current becomes 0, and the DC/DC converter 1C becomes a zero output operation state.

Note that, although the case where the switching element Q1 is on has been described above, the same applies to a case where the switching element Q1 is off, and only the direction of the current changes.

In the DC/DC converter 1C according to the present embodiment, in the case of transition to the low output operation state, while performing the output power control (frequency modulation control) in a state where the driving frequencies of the switching elements Q1 to Q6 are sufficiently increased, the phase shift control is performed in which the phase differences θ1 and θ3 are simultaneously gradually decreased from 120° (the phase difference θ2 is gradually increased from 120°). As a result, the DC/DC converter 1C can smoothly transition to the low output operation state without causing a discontinuous operation or an output power jump. Furthermore, in the DC/DC converter 1C, the output current can be reduced to 0 by setting the phase differences θ1 and θ3 to 0° (the phase difference θ2 to 360°). Note that, in the case of transition from the low output operation state to the medium to high output operation state, by performing an operation opposite to that in the above case of transition to the low output operation state, it is possible to smoothly transition to the medium to high output operation state without causing a discontinuous operation or an output power jump.

The control according to the present embodiment is irrelevant to the configuration on the rectification side, and thus it is also applicable to a three-phase CLLC current resonant type DC/DC converter such as the DC/DC converter 1B according to the second embodiment. In this case, the control unit 14C performs the phase shift control (corresponding to "fifth phase shift control" of the present invention) of simultaneously and gradually decreasing the phase differences θ4 and θ6 from 120° (gradually increasing the phase difference θ5 from 120° to be 360° - θ4 - θ6). When it is applied to the three-phase CLLC method, smooth and seamless direction switching (switching of the power transmission direction) becomes possible.

[Fourth embodiment]

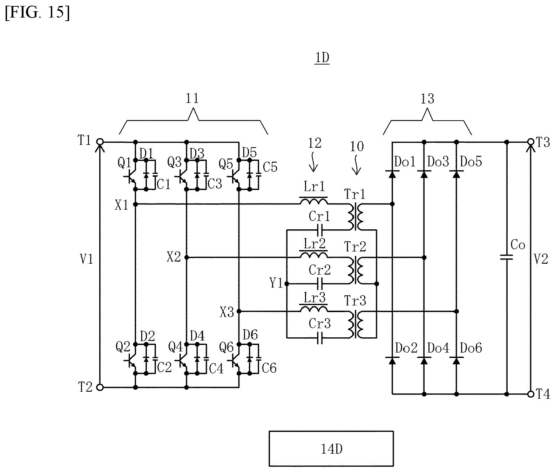

Fig. 15 illustrates a DC/DC converter 1D according to a fourth embodiment of the present invention. The DC/DC converter 1D has the same configuration as that of the third embodiment except for a control unit 14D. The control unit 14D has the same configuration as the control unit 14C of the third embodiment, but is different from the control unit 14C in control processing at the time of transition to the low output operation state (zero output operation state).

In a case where the DC/DC converter 1D is in the medium to high output operation state, the control unit 14D performs the frequency modulation control similarly to the control unit 14C of the third embodiment. Specifically, the control unit 14D alternately turns on and off the switching elements Q1 and Q2 with a phase difference of 180° by providing a predetermined dead time, alternately turns on and off the switching elements Q3 and Q4 with a phase difference of 180° by providing a predetermined dead time, and alternately turns on and off the switching elements Q5 and Q6 with a phase difference of 180° by providing a predetermined dead time. The duty of the switching elements Q1 to Q6 is set to 50%. Note that, strictly speaking, the on-duty of the switching elements Q1 to Q6 decreases from 50% by the dead time. Hereinafter, when the duty is described as X%, it is assumed that the on-duty is decreased from X% by the dead time. Furthermore, the control unit 14D brings the output value (for example, the output power value) of the DC/DC converter 1D close to a predetermined target value (for example, the target power value) by setting the respective driving frequencies of the switching elements Q1 to Q6 to the same driving frequency and simultaneously changing the same driving frequency to the same extent in a state where the phase difference θ1 between the first leg and the second leg is fixed to 120°, the phase difference θ2 between the second leg and the third leg is fixed to 120°, and the phase difference θ3 between the third leg and the first leg is fixed to 120°. In a region where the driving frequency is larger than the resonance frequency, the control unit 14D decreases the driving frequency when the output value is smaller than the target value, and increases the driving frequency when the output value is larger than the target value.

In a case where the DC/DC converter 1D is in the low output operation state, that is, in a case where the output value does not decrease to the target value even if the driving frequency is increased by the frequency modulation control, the control unit 14D starts the phase shift control. Similarly to the control unit 14C of the third embodiment, the control unit 14D at the time of the phase shift control simultaneously changes any two phase differences θ [°] (for example, the phase difference θ1 and the phase difference θ2) to the same extent, and controls the two phase differences θ in the range of 120° to 0° (second phase shift control). The remaining phase difference θ3 is θ3 = 360° - 2θ. For example, when θ = 105°, θ3 = 150°, when θ = 45°, θ3 = 270°, and when θ = 0°, θ3 = 360°. Further, when a difference from the phase difference of 120° is a phase shift amount [°], the phase shift amount is 120° - θ.

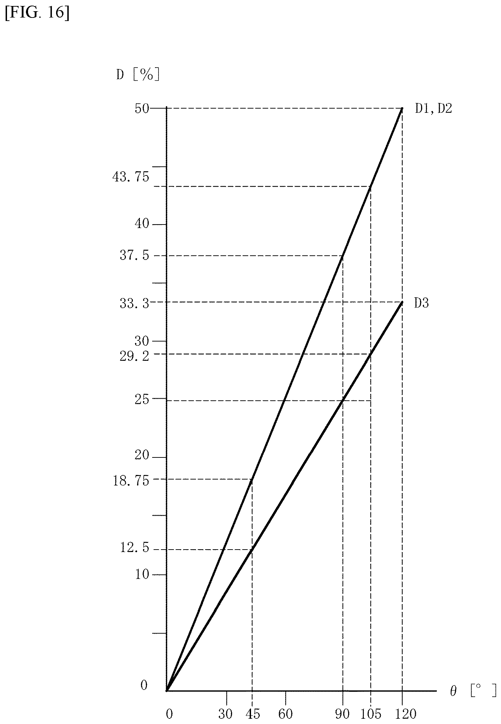

Furthermore, the control unit 14D performs duty control simultaneously with the phase shift control. Fig. 16 illustrates the relationship of duties D [%] of legs with respect to the two phase differences θ. Here, a duty D1 [%] is an on-duty of the first leg, a duty D2 [%] is an on-duty of the second leg, and a duty D3 [%] is an on-duty of the third leg.

As illustrated in Fig. 16, when controlling the two phase differences θ (θ = θ1 = θ2) after starting the phase shift control in the range of 120° to 0°, the control unit 14D determines the duties D1 and D2 on the basis of the following Equation (1), and determines the duty D3 on the basis of the following Equation (2).

$$\text{Equation (1) } D1 = D2 = 50 \times \theta/120$$

$$\text{Equation (2) } D3 = 50 \times \theta/180$$

As can be seen from Equation (1), the duties D1 and D2 are determined as values obtained by multiplying 50 [%] (first on-duty), which is an on-duty when being in the medium to high output operation state, by the ratio of the two phase differences θ to the phase difference of 120° (first phase difference). For example, D1 = D2 = 50% when θ = 120° (phase shift amount is 0°), D1 = D2 = 43.75% when θ = 105°, D1 = D2 = 37.5% when θ = 90°, D1 = D2 = 18.75% when θ = 45°, and D1 = D2 = 0% when θ = 0° (phase shift amount is 120°).

As can be seen from Equation (2), the duty D3 is determined as a value obtained by multiplying 50 [%] (first on-duty), which is an on-duty when being in the medium to high output operation state, by the ratio of the two phase differences θ to the phase difference of 180° (second phase difference). For example, D3 = 33.3% is obtained when θ = 120° (phase shift amount is 0°), D3 = 29.2% is obtained when θ = 105°, D3 = 25% is obtained when θ = 90°, D3 = 12.5% is obtained when θ = 45°, and D3 = 0% is obtained when θ = 0° (phase shift amount is 120°).

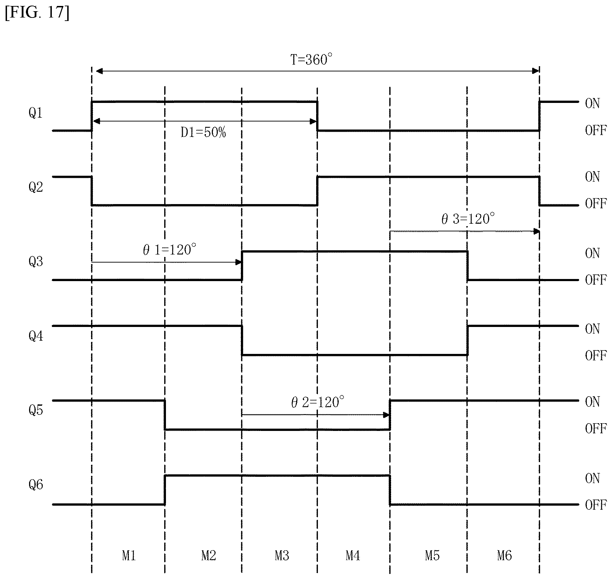

Fig. 17 illustrates a control timing of the DC/DC converter 1D in the medium to high output operation state. At this time, the control unit 14D performs the frequency modulation control while fixing the phase differences θ1, θ2, and θ3 to 120° (corresponding to the "first state" of the present invention) and fixing the duties D1, D2, and D3 to 50%. T (T = 360°) in the drawing is a switching cycle of the switching element Q1. M1 to M6 in the drawing represent modes of control timing, and the modes M1 to M6 are repeated in the medium to high output operation state. Note that, in Fig. 17, the description of the dead time is omitted, and the description of the dead time is also omitted in the following drawings.

In the medium to high output operation state illustrated in Fig. 17, a first resonance current generated in the resonant coil Lr1 and the resonant capacitor Cr1 by turning on the switching element Q1 flows through the switching elements Q4 and Q6 mainly in a period until the switching element Q4 is turned off (Q3 is turned on) (M1 and M2 periods). A second resonance current generated in the resonant coil Lr2 and the resonant capacitor Cr2 by turning on the switching element Q3 flows through the switching elements Q6 and Q2 mainly in a period until the switching element Q6 is turned off (Q5 is turned on) (M3 and M4 periods). A third resonance current generated in the resonant coil Lr3 and the resonant capacitor Cr3 by turning on the switching element Q5 flows through the switching elements Q2 and Q4 mainly in a period until the switching element Q2 is turned off (Q1 is turned on) (M5 and M6 periods). The M1 + M2 period, the M3 + M4 period, and the M5 + M6 period have the same length (θ1 = θ2 = θ3 = 120°), and thus a uniform resonance current continuously flows through the first leg, the second leg, and the third leg. Furthermore, during the M1 period, the third resonance current and the first resonance current flow through the second leg (switching element Q4) in an overlapping manner. During the M3 period, the first resonance current and the second resonance current flow through the third leg (switching element Q6) in an overlapping manner. During the M5 period, the second resonance current and the third resonance current flow through the first leg (switching element Q2) in an overlapping manner. As a result, the output current is combined in the secondary-side circuit of the DC/DC converter 1D, and a low ripple output current, which is an advantage of the three-phase full bridge circuit, is obtained.

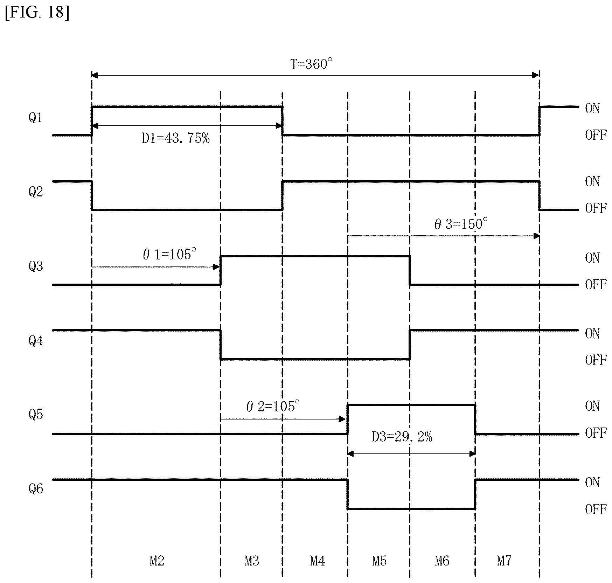

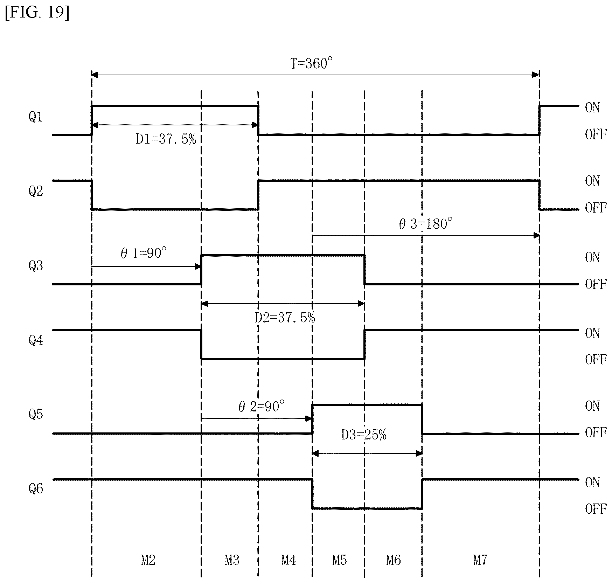

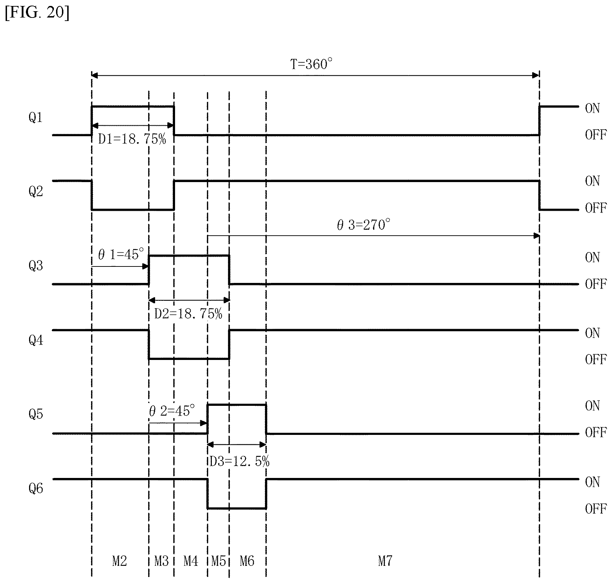

Figs. 18 to 20 illustrate control timings of the DC/DC converter 1D in the low output operation state. The DC/DC converter 1D in the low output operation state simultaneously performs the phase shift control and duty control. Fig. 18 illustrates a control timing when the two phase differences $\theta$ ($\theta$ = $\theta$1 = $\theta$2) are 105°, Fig. 19 illustrates a control timing when the two phase differences $\theta$ are 90°, and Fig. 20 illustrates a control timing when the two phase differences $\theta$ are 45°.

As illustrated in Fig. 18, in the case of performing the phase shift control in which the two phase differences $\theta$ are 105°, the control unit 14D performs duty control in which the duties D1 and D2 are 43.75% and the duty D3 is 29.2%. The difference from Fig. 17 is that the M1 period disappears and an M7 period in which the load current does not flow exists.

In the case of Fig. 18, the first resonance current flows through the switching elements Q4 and Q6 mainly in a period (M2 period) until the switching element Q4 is turned off. The second resonance current flows through the switching elements Q6 and Q2 mainly during a period until the switching element Q6 is turned off (M3 and M4 periods). The third resonance current flows through the switching elements Q2 and Q4 mainly during a period until the switching element Q5 is turned off (M5 and M6 periods). The M5 + M6 period has the same length as the M2 period and the same length as the M3 + M4 period, and thus a uniform resonance current continuously flows through the first leg, the second leg, and the third leg. Furthermore, during the M3 period, the first resonance current and the second resonance current flow through the third leg (switching element Q6) in an overlapping manner, and during the M5 period, the second resonance current and the third resonance current flow through the first leg (switching element Q2) in an overlapping manner. As a result, the output current is combined in the secondary-side circuit of the DC/DC converter 1D, and a low ripple output current, which is an advantage of the three-phase full bridge circuit, is obtained. In the M7 period, the resonance current (driving current) does not flow in the primary-side circuit, and thus the output current (load current) does not flow in the secondary-side circuit.

As illustrated in Fig. 19, in the case of performing the phase shift control in which the two phase differences $\theta$ are 90°, the control unit 14D performs duty control in which the duties D1 and D2 are 37.5% and the duty D3 is 25%. The difference from Fig. 18 is that the period during which the resonance current flows (M2 to M6 period) decreases and the period during which the current does not flow (M7 period) increases. Also in the case of Fig. 19, the M5 + M6 period has the same length as the M2 period and the same length as the M3 + M4 period, and thus a uniform resonance current continuously flows through the first leg, the second leg, and the third leg. Furthermore, the output current is combined in the secondary-side circuit of the DC/DC converter 1D, and a low ripple output current, which is an advantage of the three-phase full bridge circuit, is obtained.

As illustrated in Fig. 20, in the case of performing the phase shift control in which the two phase differences $\theta$ are 45°, the control unit 14D performs duty control in which the duties D1 and D2 are 18.75% and the duty D3 is 12.5%. The difference from Fig. 19 is that the period during which the resonance current flows (M2 to M6 period) decreases and the period during which the current does not flow (M7 period) increases. Also in the case of Fig. 20, the M5 + M6 period has the same length as the M2 period and the same length as the M3 + M4 period, and thus a uniform resonance current continuously flows through the first leg, the second leg, and the third leg. Furthermore, the output current is combined in the secondary-side circuit of the DC/DC converter 1D, and a low ripple output current, which is an advantage of the three-phase full bridge circuit, is obtained.

The current path of the DC/DC converter 1D when the phase shift control and the duty control are performed is the same as the current path of the DC/DC converter 1D when the frequency modulation control is performed. That is, the DC/DC converter 1D transitions from the frequency modulation control to the phase shift control and the duty control while maintaining the operation of the three-phase LLC method. In the DC/DC converter 1D, even if the two phase differences $\theta$ are reduced (the phase shift amount is increased) from 120° to 105°, 90°, and 45°, the output can be smoothly reduced while maintaining the operation of the three-phase LLC method. Note that, in the DC/DC converter 1D, even when the two phase differences $\theta$ are increased (the phase shift amount is decreased) from 45° to 90°, 105°, and 120°, the output can be smoothly increased while maintaining the operation of the three-phase LLC method.

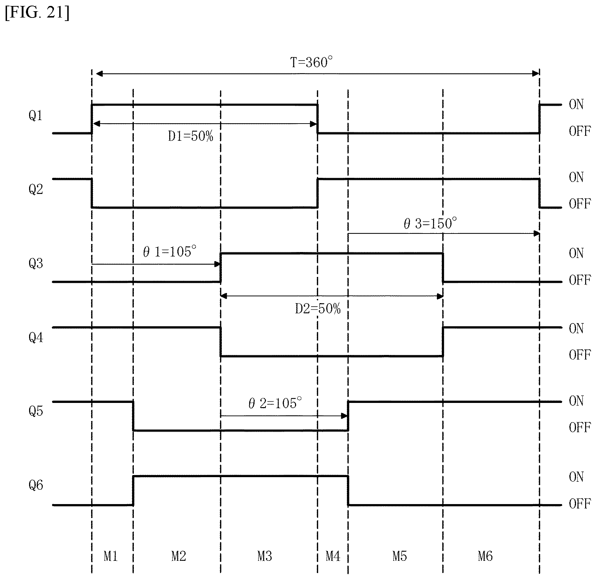

Here, Fig. 21 illustrates a control timing in the low output operation state of the DC/DC converter according to a comparative example. The DC/DC converter according to the comparative example is the same as the DC/DC converter 1D except that duty control is not performed in the low output operation state. The DC/DC converter according to the comparative example is, for example, the DC/DC converter 1C according to the third embodiment.

Fig. 21 illustrates control timing when the two phase differences $\theta$ ($\theta$ = $\theta$1 = $\theta$2) are 105°. The first resonance current flows through the switching elements Q4 and Q6 in the M1 and M2 periods. The second resonance current flows through the switching elements Q6 and Q2 in the M3 and M4 periods. The third resonance current flows through the switching elements Q2 and Q4 in the M5 and M6 periods. In the case of Fig. 21, the duties D1, D2, and D3 are fixed to 50%, and thus the M5 + M6 period is longer than the M1 + M2 period and longer than the M3 + M4 period. As a result, a uniform resonance current does not flow through the first leg, the second leg, and the third leg (in this case, the third resonance current increases). Since the phase shift control is performed in a region where the driving frequency is relatively high, the increased resonance current causes heat generation in the resonant coil under a predetermined condition, and the like. The predetermined condition is, for example, a case where the input voltage is high, the resonance current is large, and the driving frequency is high.

As can be seen from the comparison between Fig. 21 and Figs. 18 to 20, in the DC/DC converter 1D, by performing the duty control simultaneously with the phase shift control, a phenomenon that the resonance current of one phase increases, which occurs due to the phase shift control, can be suppressed. That is, in the DC/DC converter 1D, the resonance current of each phase can be uniformly increased or decreased, and a low ripple output current, which is an advantage of the three-phase full bridge circuit, is obtained.

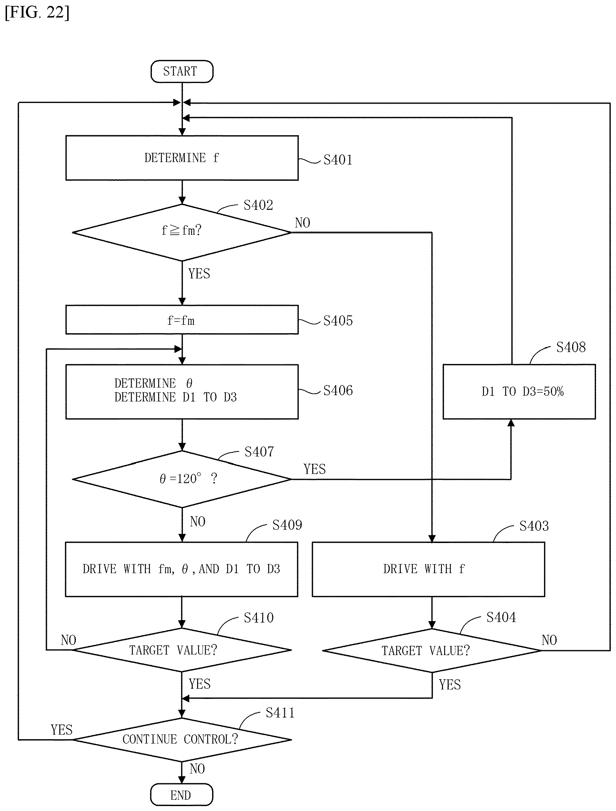

Fig. 22 illustrates an example of a flowchart of control processing executed by the control unit 14D of the DC/DC converter 1D. The control unit 14D executes the control processing while monitoring the output voltage and the output current by various detection circuits.

The control unit 14D that has started the control processing first starts the frequency modulation control. The control unit 14D determines a driving frequency f [Hz] of the switching elements Q1 to Q6 on the basis of the difference between the output value (for example, the output power value) of the DC/DC converter 1D and the target value (for example, the target power value) in a state where the phase differences θ1 to θ3 are fixed to 120° (phase shift amount is 0°) and the duties D1 to D3 are fixed to 50% (S401). In a region where the driving frequency f is larger than the resonance frequency, the control unit 14D decreases the driving frequency f when the output value is smaller than the target value, and increases the driving frequency f when the output value is larger than the target value. The target value may be, for example, a value set in advance by the control unit 14D, a value determined from input/output conditions of the DC/DC converter 1D, or a value input from an external device. The target value may change from moment to moment.

The control unit 14D compares the driving frequency f determined in step S401 with a predetermined threshold fm [Hz], and determines whether or not the driving frequency f is equal to or higher than the threshold fm (S402). Here, the threshold fm is a resonance frequency determined by the resonant coils Lr1 to Lr3 and the resonant capacitors Cr1 to Cr3, or is a sufficiently large value with respect to the resonance frequency. However, when the driving frequency f becomes too much larger than the resonance frequency, the ratio of an output change to a frequency change decreases and control gain decreases, and in addition, a copper loss and an iron loss of the resonant coils Lr1 to Lr3 and the transformers Tr1 to Tr3 and switching losses of the switching elements Q1 to Q6 increase and the power conversion efficiency decreases. Thus, in the latter case, it is preferable to set a value about 1.5 to 2 times the resonance frequency as the maximum frequency (threshold fm) in consideration of use conditions of the power supply (input/output voltage/current and use temperature) and characteristics of the used components (the resonance component and the transformers Tr1 to Tr3). In the former case, the latter problem can be avoided, but since the switching of the switching elements Q1 to Q6 is performed in a state where a large resonance current is flowing, there arises a problem that it is hard switching and switching noise and ripple noise increase.

If the driving frequency f is less than the threshold fm (NO in S402), the control unit 14D sets the driving frequency f to the value determined in step S401 and drives the switching elements Q1 to Q6 at the driving frequency f (S403). Next, the control unit 14D determines whether the output value has reached the target value (S404). In a case where the output value has not reached the target value (NO in S404), the control unit 14D repeats the processing in and after step S401, and in a case where the output value has reached the target value (YES in S404), the processing proceeds to step S411.

When the driving frequency f is equal to or higher than the threshold fm (YES in S402), the control unit 14D sets the driving frequency f to the threshold fm (S405). The control unit 14D that has set the driving frequency f to the threshold fm starts the phase shift control and duty control. That is, the control unit 14D determines two phase differences θ (θ = θ1 = θ2) in the range of 120° to 0°, determines the duties D1 and D2 on the basis of Equation (1), and determines the duty D3 on the basis of Equation (2) (S406). The control unit 14D calculates the two phase differences θ by, for example, multiplying the difference between the output value at that time and the target value by a predetermined gain. Next, the control unit 14D determines whether or not the determined two phase differences θ are 120° (S407).

When the two phase differences θ are 120° (YES in S407), the control unit 14D ends the phase shift control and the duty control, sets the duties D1 to D3 to 50% (S408), and repeats the processing of step S401 and subsequent steps.

When the two phase differences θ are less than 120° (NO in S407), the control unit 14D sets the two phase differences θ and the duties D1 to D3 to the values determined in step S406, and drives the switching elements Q1 to Q6 with the threshold fm (S409). The phase difference θ3 is θ3 = 360° - 2θ. Next, the control unit 14D determines whether the output value has reached the target value (S410). In a case where the output value has not reached the target value (NO in S410), the control unit 14D repeats the processing in and after step S406, and in a case where the output value has reached the target value (YES in S410), the processing proceeds to step S411.

In step S411, the control unit 14D determines whether to continue the control processing. The control unit 14D makes the determination in step S411 on the basis of, for example, whether a termination command has been received from an external device. For example, the control unit 14D determines to continue the control processing in a case where the end command has not been received (YES in S411), and repeats the processing in and after step S401, and determines not to continue the control processing in a case where the end command has been received (NO in S411), and ends the control processing. Note that, in the vicinity of the phase difference θ of 120°, when the phase difference θ is 120° and the duty D3 is 33.3% in step S406, the duty D3 changes to 50% when the process proceeds to step S408, so that the change in the duty D3 is not continuous. However, as described above, since the period during which the third resonance current mainly flows is the M5 + M6 period, the period during which the resonance current flows is the same before and after the change in duty D3, and there is almost no influence when considering the convergence of the resonance current at a high frequency for starting the phase shift control.

In the DC/DC converter 1D according to the present embodiment, by switching from the frequency modulation control to the phase shift control (second phase shift control) that changes the two phase differences θ, it is possible to smoothly transition to the low output operation state without performing complicated control and without causing a discontinuous operation or an output power jump. Further, in the DC/DC converter 1D according to the present embodiment, the duty control is performed simultaneously with the phase shift control, so that a phenomenon (see Fig. 21) that the resonance current of one phase increases can be suppressed. Note that, in the present embodiment, a phenomenon that the current of one specific phase increases more than that in the first state during the phase shift control occurs when the two phase differences between a certain phase and the other two phases are in the range of 90° to less than 120°. Thus, in the DC/DC converter 1D, the range in which the duty control is performed simultaneously with the phase shift control may be limited to this range, and only the phase shift control may be performed in the range in which the two phase differences are less than 90°.

In the DC/DC converter 1D according to the present embodiment, the resonance current of each phase can be uniformly increased or decreased, and a low ripple output current, which is an advantage of the three-phase full bridge circuit, is obtained. In the DC/DC converter 1D according to the present embodiment, it is possible to suppress generation of switching noise and ripple noise generated at the time of burst (intermittent switching) control of PWM control.

[Fifth embodiment]

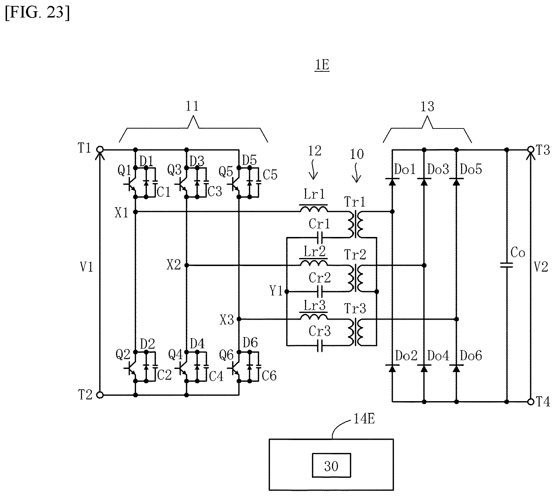

Fig. 23 illustrates a DC/DC converter 1E according to a fifth embodiment of the present invention. The DC/DC converter 1E has the same configuration as that of the fourth embodiment except for the control unit 14E.

The control unit 14E has the same configuration as the control unit 14D of the fourth embodiment except that the control unit 14E includes a frequency two-phase phase shift duty conversion control block 30 (hereinafter, the control block is referred to as a control block 30). That is, the control unit 14E is different from the control unit 14D of the fourth embodiment in that the frequency modulation control, the phase shift control (second phase shift control), and the duty control are simultaneously performed in the low output operation state, and the driving frequency f is used as a control amount of the phase shift control.

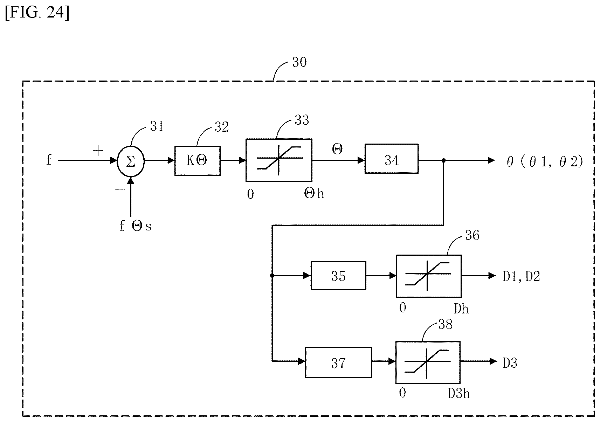

As illustrated in Fig. 24, the control block 30 includes an addition unit 31, a multiplication unit 32, a first clamp unit 33, a first calculation unit 34, a second calculation unit 35, a second clamp unit 36, a third calculation unit 37, and a third clamp unit 38.

In a case of decreasing the output, the control unit 14E increases the driving frequency f of the switching elements Q1 to Q6. In a case where the driving frequency f is equal to or higher than a predetermined first frequency fOs [Hz], the addition unit 31 outputs a difference (f - fOs) between the driving frequency f and the first frequency fOs to the multiplication unit 32. The multiplication unit 32 calculates a phase shift amount $\Theta$ [°] by multiplying the difference (f - fOs) by the first gain $K\Theta$, and outputs the phase shift amount $\Theta$ to the first clamp unit 33. The first clamp unit 33 outputs the phase shift amount $\Theta$ ($\Theta$ = (f - fOs) $\times$ $K\Theta$ $\leq$ Oh) with a lower limit of the phase shift amount $\Theta$ as 0° and an upper limit thereof as a maximum phase shift amount Oh [°] (in the present embodiment, Oh = 120°). The first calculation unit 34 calculates two phase differences θ (θ = θ1 = θ2 = 120° - $\Theta$) on the basis of the phase shift amount $\Theta$ and outputs the two phase differences θ. The phase difference θ3 is θ3 = 360° - 2θ. The control unit 14E performs the phase shift control (second phase shift control) on the basis of the two phase differences θ output from the first calculation unit 34. Note that, in this example, the processing of calculating the phase difference after obtaining the phase shift amount has been described, but the phase difference may be directly calculated.

In a case where the control unit 14E decreases the output, the driving frequency f increases, and thus the difference (f - fΘs) output from the addition unit 31 increases. Until the phase shift amount $\Theta$ reaches the maximum phase shift amount Oh, the phase shift amount $\Theta$ uniformly increases (the two phase differences θ uniformly decrease) with an increase in the driving frequency f, so that the output of the DC/DC converter 1E decreases.

The second calculation unit 35 calculates the duties D1 and D2 on the basis of Equation (1) of the fourth embodiment, and outputs the duties D1 and D2 to the second clamp unit 36. The second clamp unit 36 outputs the duties D1 and D2 with a lower limit of the duties D 1 and D2 as 0% and an upper limit thereof as Dh [%]. Note that, in the present embodiment, Dh is set to 50%, but Dh can be set to any value between 0% and 50%.

The third calculation unit 37 calculates the duty D3 on the basis of Equation (2) of the fourth embodiment and outputs the duty D3 to the third clamp unit 38. The third clamp unit 38 outputs the duty D3 with a lower limit of the duty D3 as 0% and an upper limit thereof as D3h [%]. Note that, in the present embodiment, D3h is set to 33.3%, but D3h can be set to any value between 0% and 33.3%.

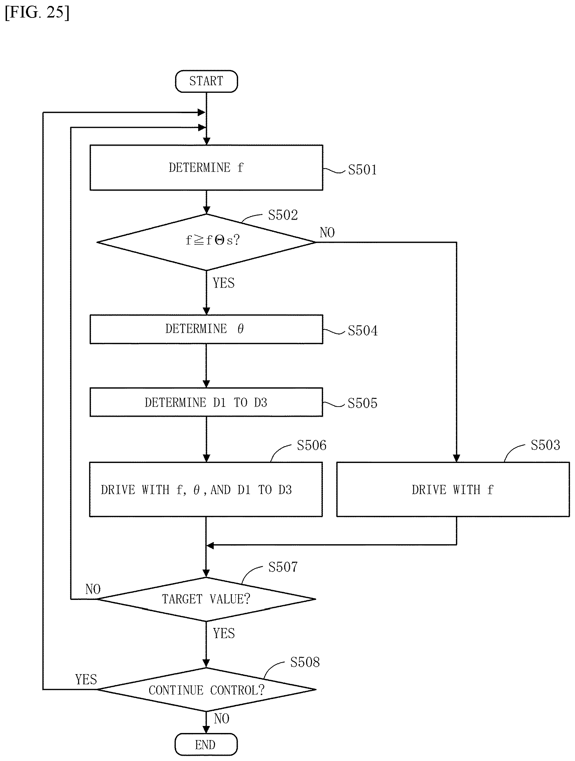

Fig. 25 illustrates an example of a flowchart of control processing executed by the control unit 14E of the DC/DC converter 1E. The control unit 14E executes control processing while monitoring the output voltage and the output current by various detection circuits.

The control unit 14E that has started the control processing determines the driving frequency f of the switching elements Q1 to Q6 as in step S401 of Fig. 22 (S501). The control unit 14E compares the driving frequency f determined in step S501 with the first frequency fOs, and determines whether or not the driving frequency f is equal to or higher than the first frequency fOs (S502). The processing in step S502 is performed by the addition unit 31.

When the driving frequency f is less than the first frequency fOs (NO in S502), the control unit 14E sets the driving frequency f to the value determined in step S501 and drives the switching elements Q1 to Q6 at the driving frequency f (S503). Next, the control unit 14E proceeds to step S507.

When the driving frequency f is equal to or higher than the first frequency fΘs (YES in S502), the control unit 14E starts the phase shift control and the duty control while continuing the frequency modulation control. That is, the control unit 14E determines two phase differences θ (θ = θ1 = θ2) (S504), and determines the duties D1 to D3 (S505). The processing in step S504 is performed by the multiplication unit 32, the first clamp unit 33, and the first calculation unit 34. In the processing of step S505, the determination of the duties D1 and D2 is performed by the second calculation unit 35 and the second clamp unit 36, and the determination of the duty D3 is performed by the third calculation unit 37 and the third clamp unit 38.

Next, the control unit 14E sets the driving frequency f to the value determined in step S501, sets the two phase differences θ to the value determined in step S504, sets the duties D1 to D3 to the value determined in step S505, and drives the switching elements Q1 to Q6 (S506). The phase difference θ3 is θ3 = 360° - 2θ.

In step S507, the control unit 14E determines whether the output value has reached the target value. In a case where the output value has not reached the target value (NO in S507), the control unit 14E repeats the processing in and after step S501, and in a case where the output value has reached the target value (YES in S507), the processing proceeds to step S508. In step S508, the control unit 14E determines whether to continue the control processing as in step S411 in Fig. 22. When it is determined to continue the control processing (YES in S508), the control unit 14E repeats the processing in and after step S501, and when it is determined not to continue the control processing (NO in S508), the control unit ends the control processing.

In the DC/DC converter 1E according to the present embodiment, by calculating the two phase differences θ using the driving frequency f, in other words, by setting the driving frequency f as the control amount of the phase shift control, it is possible to control the two phase differences θ and the duties D1 to D3 in an integrated manner. Thus, in the DC/DC converter 1E according to the present embodiment, it is not necessary to switch and control the frequency modulation control, the phase shift control, and the duty control, and there is an advantage that the structure of software of the control unit 14E can be simplified. Note that the control block 30 in Fig. 24 can be applied to the third embodiment (control unit 14C) by deleting the calculation units 35 and 37 and the clamp units 36 and 38 that perform duty control, and can be applied to the first embodiment (control unit 14A) by calculating two phase differences θ (0 = θ1 = θ2 = 120° + Θ) on the basis of the phase shift amount Θ and outputting the two phase differences θ in the first calculation unit 34. That is, in the first to third embodiments, similarly to the present embodiment, the control units 14A to 14C set the driving frequency f as the control amount of the phase shift control, and for example, can calculate the change amount (phase shift amount) of the two phase differences θ by multiplying the difference between the driving frequency f and the first frequency fΘs by a predetermined gain.

[Sixth embodiment]

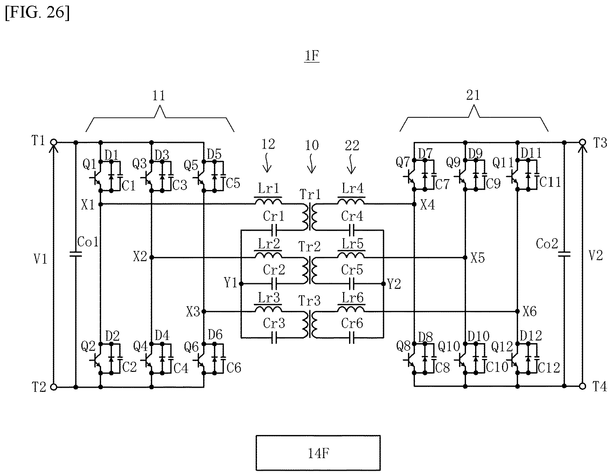

Fig. 26 illustrates a DC/DC converter 1F according to a sixth embodiment of the present invention. The DC/DC converter 1F is obtained by adding a bidirectional power transmission (forward power transmission and reverse power transmission) function to the DC/DC converter 1D of the fourth embodiment. That is, the DC/DC converter 1F has the same configuration as that of the fourth embodiment except for the control unit 14F, the secondary-side switching circuit 21 and the secondary-side resonant circuit 22, and the capacitors Co1 and Co2. Note that the configuration of a main circuit of the DC/DC converter 1F (configuration excluding the control unit 14F) is the same as the configuration of a main circuit of the DC/DC converter 1B of the second embodiment.

In order to simplify the description, it is assumed that the control unit 14F at the time of the forward power transmission turns off the switching elements Q7 to Q12 and performs the diode bridge rectification control by the diodes D7 to D12. As a result, the control during the forward power transmission is the same as that in the fourth embodiment. Note that the control unit 14F at the time of the forward power transmission may perform the synchronous rectification control on the secondary-side switching circuit 21 instead of the diode bridge rectification control.

Similarly, it is assumed that the control unit 14F at the time of the reverse power transmission turns off the switching elements Q1 to Q6 and performs the diode bridge rectification control by the diodes D1 to D6. The control of the secondary-side switching circuit 21 at the time of the reverse power transmission by the control unit 14F is the same as the control of the primary-side switching circuit 11 at the time of the forward power transmission by the control unit 14F. Note that the control unit 14F at the time of the reverse power transmission may perform the synchronous rectification control on the primary-side switching circuit 11.

In the DC/DC converter 1F according to the present embodiment, by switching from the frequency modulation control to the phase shift control (corresponding to the "fifth phase shift control") even during the reverse power transmission, it is possible to smoothly transition to the low output operation state without performing complicated control and without causing a discontinuous operation or an output power jump. In the DC/DC converter 1F according to the present embodiment, it is possible to suppress the phenomenon that the resonance current of one phase increases by performing the duty control simultaneously with the phase shift control even during the reverse power transmission. Further, in the DC/DC converter 1F according to the present embodiment, the resonance current of each phase can be uniformly increased or decreased even during the reverse power transmission, and a low ripple output current, which is an advantage of the three-phase full bridge circuit, is obtained.

Note that the control unit 14F may include the control block 30 of the fifth embodiment. In a case where the control unit 14F includes the control block 30, the DC/DC converter 1F can obtain effects similar to those of the fifth embodiment during the forward power transmission and the reverse power transmission.

[Modification]

Although the embodiments of the DC/DC converter according to the present invention have been described above, the present invention is not limited to the above embodiments.

A DC/DC converter according to the present invention includes a transformer including a primary-side coil and a secondary-side coil, a primary-side switching circuit including a first leg, a second leg, and a third leg connected in parallel, each leg including an upper arm and a lower arm connected in series, each arm including a switching element, a primary-side resonant circuit provided between the primary-side switching circuit and the primary-side coil, the primary-side resonant circuit including a resonant coil and a resonant capacitor, a secondary-side rectifier circuit connected to the secondary-side coil, and a control unit that controls the primary-side switching circuit, the DC/DC converter performing forward power transmission from the primary-side switching circuit to the secondary-side rectifier circuit, in which when reducing an output of the secondary-side rectifier circuit to a predetermined value or less from a first state in which all three phase differences among the respective legs of the first leg, the second leg, and the third leg become a first phase difference, a configuration of the control unit can appropriately change as long as the control unit performs phase shift control of simultaneously increasing or decreasing two phase differences among the three phase differences and decreasing or increasing the remaining one phase difference.

For example, a combination of two phase differences between a certain phase and the other two phases can be appropriately changed among a phase difference $\theta 1$ between the first leg and the second leg, a phase difference $\theta 2$ between the second leg and the third leg, and a phase difference $\theta 3$ between the third leg and the first leg. Further, in the fourth embodiment, the configuration of a main circuit of the DC/DC converter 1D can be appropriately changed as long as the primary-side circuit (drive circuit) is a current resonance type having a three-phase full bridge configuration. The same applies to other embodiments.

In the fourth embodiment, when the mode in which the current flows (M2 to M6 periods) is the same during the phase shift control and the duty control, the control unit 14D can determine the duties D1 to D3 by any method. For example, the control unit 14D may determine the duty D3 on the basis of Equation (2) and determine the duties D1 and D2 so as to satisfy the following Equation (3).

$$\text{Equation (3)} \quad 50 \times \theta/180 < D1 = D2 \leq 50 \times \theta/120$$

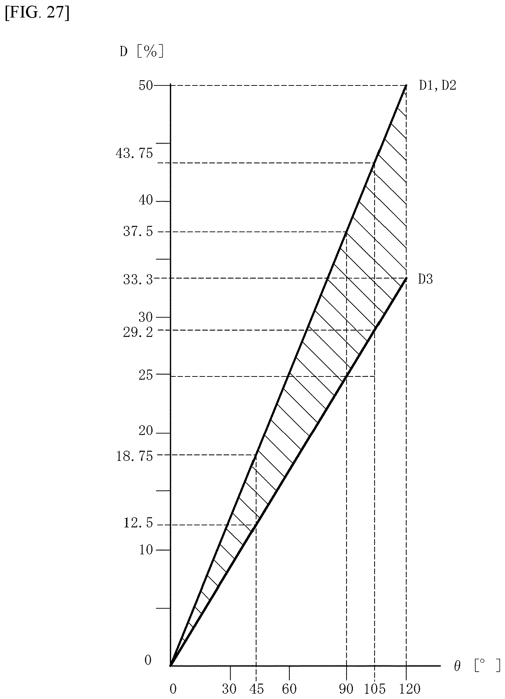

In Fig. 27, a region satisfying Equation (3) is indicated by a hatched portion. When the duties D1 and D2 are determined so as to satisfy the equation (3), the period during which the excitation current flows becomes short, but since the M5 + M6 period has the same length as the M2 period and the M3 + M4 period, a uniform resonance current continuously flows in each phase.

The control unit 14D may determine the duties D1 to D3 on the basis of the following equation (4).

$$\text{Equation (4)} \quad D1 = D2 = D3 = 50 \times \theta/180$$

In this case, the resonance current flows only for each phase and the output current is not synthesized in the secondary-side circuit, and thus the effect of reducing the ripple of the output current is reduced. However, there is an advantage that the duty control can be simplified.

DESCRIPTION OF REFERENCE SIGNS

| | |
|---|---|
| 1A to 1F | DC/DC converter |
| 10 | Transformer |
| 11 | Primary-side switching circuit |
| 12 | Primary-side resonant circuit |
| 13 | Secondary-side rectifier circuit |
| 14A to 14F | Control unit |
| 21 | Secondary-side switching circuit |
| 22 | Secondary-side resonant circuit |
| 30 | Frequency two-phase phase shift duty conversion control block |
| 31 | Addition unit |
| 32 | Multiplication unit |
| 33 | First clamp unit |
| 34 | First calculation unit |
| 35 | Second calculation unit |
| 36 | Second clamp unit |
| 37 | Third calculation unit |
| 38 | Third clamp unit |

**Claims**

1. A DC/DC converter comprising:

   a transformer including a primary-side coil and a secondary-side coil;
   a primary-side switching circuit including a first leg, a second leg, and a third leg connected in parallel, each leg including an upper arm and a lower arm connected in series, each arm including a switching element;
   a primary-side resonant circuit provided between the primary-side switching circuit and the primary-side coil, the primary-side resonant circuit including a resonant coil and a resonant capacitor;
   a secondary-side rectifier circuit connected to the secondary-side coil; and
   a control unit that controls the primary-side switching circuit, the DC/DC converter performing forward power transmission from the primary-side switching circuit to the secondary-side rectifier circuit, wherein
   the control unit performs, when reducing an output of the secondary-side rectifier circuit to a predetermined value or less from a first state in which all three phase differences among the respective legs of the first leg, the second leg, and the third leg become a first phase difference, first phase shift control of simultaneously increasing two phase differences among the three phase differences and decreasing a remaining one phase difference or second phase shift control of simultaneously decreasing two phase differences among the three phase differences and increasing a remaining one phase difference.

2. The DC/DC converter according to claim 1, wherein
   the control unit simultaneously increases the two phase differences from 120° that is the first phase difference by the first phase shift control, and transitions to a state in which both of the two phase differences become 180° that is a second phase difference.

3. The DC/DC converter according to claim 2, wherein
   in a state in which the two phase differences become the second phase difference, the control unit performs third phase shift control among the legs to increase or decrease a phase difference between two legs having same phases among the first leg, the second leg, and the third leg and the remaining one leg, and increases the phase difference up to 360° or decreases the phase difference down to 0°.

4. The DC/DC converter according to claim 2, wherein
in a state in which the two phase differences become the second phase difference, the control unit stops one of the two legs having the same phases among the first leg, the second leg, and the third leg and drives the other leg.

5. The DC/DC converter according to claim 1, wherein
the control unit simultaneously decreases the two phase differences from 120° that is the first phase difference by the second phase shift control, and transitions to a state in which both of the two phase differences become 0° that is a third phase difference.

6. The DC/DC converter according to claim 1, wherein
the secondary-side rectifier circuit includes:

a secondary-side switching circuit including a fourth leg, a fifth leg, and a sixth leg connected in parallel, each leg including an upper arm and a lower arm connected in series, each arm including a switching element; and
a secondary-side resonant circuit provided between the secondary-side switching circuit and the secondary-side coil and including a resonant coil and a resonant capacitor, and
during reverse power transmission from the secondary-side switching circuit to the primary-side switching circuit, the control unit controls the secondary-side switching circuit, and when reducing an output of the primary-side switching circuit to a predetermined value or less from a second state in which all three phase differences among the respective legs of the fourth leg, the fifth leg, and the sixth leg become the first phase difference, the control unit performs fourth phase shift control of simultaneously increasing two phase differences among the three phase differences and decreasing a remaining one phase difference or fifth phase shift control of simultaneously decreasing two phase differences among the three phase differences and increasing a remaining one phase difference.

7. The DC/DC converter according to claim 1, wherein
the control unit performs, when a driving frequency of the primary-side switching circuit is less than a predetermined first frequency, frequency modulation control to increase or decrease the driving frequency according to an output of the secondary-side rectifier circuit, and calculates, when the driving frequency is equal to or higher than the first frequency, a phase shift amount by multiplying a difference between the driving frequency and the first frequency by a predetermined gain, calculates the two phase differences on a basis of the phase shift amount, and performs the first phase shift control or the second phase shift control.

8. The DC/DC converter according to claim 1, wherein
the control unit performs duty control simultaneously with the second phase shift control, and sets, during the duty control, an on-duty of each of the first leg, the second leg, and the third leg to be between a value obtained by multiplying a first on-duty that is an on-duty when being in the first state by a ratio of the two phase differences to the second phase difference and a value obtained by multiplying the first on-duty by a ratio of the two phase differences to the first phase difference.

9. The DC/DC converter according to claim 8, wherein
the control unit sets, during the duty control, an on-duty of two legs of the first leg, the second leg, and the third leg to a value obtained by multiplying the first on-duty by the ratio of the two phase differences to the first phase difference, and an on-duty of a remaining one of the first leg, the second leg, and the third leg to a value obtained by multiplying the first on-duty by the ratio of the two phase differences to the second phase difference.

10. The DC/DC converter according to claim 8, wherein
the control unit performs, when a driving frequency of the primary-side switching circuit is less than a predetermined threshold, frequency modulation control to increase or decrease the driving frequency according to an output of the secondary-side rectifier circuit, and performs the second phase shift control and the duty control with the driving frequency fixed to the threshold when the driving frequency is equal to or higher than the threshold.

11. The DC/DC converter according to claim 8, wherein
the control unit performs, when a driving frequency of the primary-side switching circuit is less than a predetermined first frequency, frequency modulation control to increase or decrease the driving frequency according to an output of the secondary-side rectifier circuit; and calculates, when the driving frequency is equal to or higher than the first frequency, a phase shift amount by multiplying a difference between the driving frequency and the first frequency by a predetermined gain, calculates the two phase differences on a basis of the phase shift amount, calculates each of the on-duties on a basis of the two phase differences, and performs the second phase shift control and the duty control.

[FIG. 1]

1A

11            13

12  10

T1

Q1 D1 Q3 D3 Q5 D5 C5

C1 C3

X1

Lr1 Tr1

Cr1

Do1 Do3 Do5

V1

X2

Lr2 Tr2

Cr2

Co   V2

Y1

Lr3 Tr3

X3

Cr3

Q2 D2 Q4 D4 Q6 D6

C2 C4 C6

Do2 Do4 Do6

T2                                         T4

T3

14A

[FIG. 2]

PHASE DIFFERENCE(°)

180

$\theta 1, \theta 3$

120

$\theta 1, \theta 2, \theta 3$

$\theta 2$

60

0

t0         t1   t2    t3    t4      TIME

MEDIUM TO HIGH OUTPUT
OPERATION STATE

LOW OUTPUT
OPERATION STATE

[FIG. 3]

```
                                    ┌──────────┐
                                    │  START   │
                                    └────┬─────┘
                                         │
                                         ▼               ⌒S101
   ┌──────────────────────────────────────────────┐
   │          SIMULTANEOUSLY  INCREASE             │
   │              θ 1  AND  θ 3                     │
   └──────────────────────┬───────────────────────┘
                          │                          ⌒S102
                          ▼
   ┌──────────────────────────────────────────────┐
   │  CONTROL  DRIVING  FREQUENCIES  TO  CONTROL    │
   │      OUTPUT  VALUE  TO  TARGET  VALUE          │
   └──────────────────────┬───────────────────────┘
                          │                          ⌒S103
             NO           ▼
        ◄────────────< θ 1, θ 3=180° ? >
                          │
                        YES
                          │
                          ▼
                    ┌──────────┐
                    │   END    │
                    └──────────┘
```

[FIG. 4]

[FIG. 5]

（A）

（B）

[FIG. 6]

（A）

I2

I2+I3    θ1    I1
        θ2  θ3

I3

（B）

I2

I2+I3    θ1
        θ2  θ3    I1

I3

（C）

I2

I2+I3    θ1
        θ2  θ3    I1

I3

（D）

I2+I3    I2    θ1
        I3    θ3    I1

[FIG. 7]

[FIG. 8]

[FIG. 9]

[FIG. 10]

[FIG. 11]

[FIG. 12]

[FIG. 13]

(A)

(B)

[FIG. 14]

(A)

(B)

[FIG. 15]

[FIG. 16]

[FIG. 17]

[FIG. 18]

[FIG. 19]

[FIG. 20]

[FIG. 21]

[FIG. 22]

[FIG. 23]

[FIG. 24]

[FIG. 25]

```
                        ┌─────────┐
                        │  START  │
                        └────┬────┘
                             │
     ┌──────────────────────►│
     │  ┌───────────────────►│
     │  │                    ▼
     │  │     ┌──────────────────────────┐
     │  │     │        DETERMINE f        │────S501
     │  │     └─────────────┬────────────┘
     │  │                   │        ┌─S502
     │  │                   ▼
     │  │              ╱─────────────╲         NO
     │  │            ╱    f ≧ fΘs ?    ╲──────────────────┐
     │  │             ╲               ╱                   │
     │  │              ╲─────────────╱                    │
     │  │                   │                             │
     │  │                  YES                            │
     │  │                   ▼                             │
     │  │     ┌──────────────────────────┐               │
     │  │     │        DETERMINE θ        │────S504       │
     │  │     └─────────────┬────────────┘               │
     │  │                   │                             │
     │  │                   ▼                             │
     │  │     ┌──────────────────────────┐               │
     │  │     │     DETERMINE D1 TO D3     │────S505       │
     │  │     └─────────────┬────────────┘               │
     │  │           ┌─S506  │                    ┌─S503   │
     │  │           ▼                            ▼
     │  │  ┌──────────────────────────┐  ┌──────────────────────┐
     │  │  │ DRIVE WITH f, θ, AND D1 TO D3 │  │      DRIVE WITH f      │
     │  │  └─────────────┬────────────┘  └───────────┬──────────┘
     │  │                │                           │
     │  │                │         ┌─────────────────┘
     │  │                ▼         ▼
     │  │          ┌─S507
     │  │    NO   ╱─────────────╲
     │  └────────    TARGET VALUE?  ╲
     │            ╲               ╱
     │             ╲─────────────╱
     │                   │
     │                  YES
     │                   ▼
     │            ┌─S508
     │   YES    ╱─────────────────╲
     └─────────  CONTINUE CONTROL?  ╲
               ╲                   ╱
                ╲─────────────────╱
                       │
                       NO
                       ▼
                 ┌─────────┐
                 │   END   │
                 └─────────┘
```

[FIG. 26]

[FIG. 27]

## INTERNATIONAL SEARCH REPORT

| | International application No. |
|---|---|
| | **PCT/JP2023/005450** |

### A. CLASSIFICATION OF SUBJECT MATTER

***H02M 3/28***(2006.01)i
FI:  H02M3/28 H; H02M3/28 Q

According to International Patent Classification (IPC) or to both national classification and IPC

### B. FIELDS SEARCHED

Minimum documentation searched (classification system followed by classification symbols)

H02M3/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-153382 A (GS YUASA INFRASTRUCTURE SYSTEMS CO., LTD.) 30 September 2021 (2021-09-30)<br>entire text, all drawings | 1-11 |
| A | JP 2021-118604 A (OMRON CORP.) 10 August 2021 (2021-08-10)<br>entire text, all drawings | 1-11 |
| A | US 2010/0328968 A1 (ADRAGNA, Claudio) 30 December 2010 (2010-12-30)<br>entire text, all drawings | 1-11 |
| A | US 2018/0152112 A1 (HUAWEI TECHNOLOGIES CO., LTD.) 31 May 2018 (2018-05-31)<br>entire text, all drawings | 1-11 |
| A | US 2020/0044572 A1 (VALEO SIEMENS EAUTOMOTIVE NORWAY AS) 06 February 2020 (2020-02-06)<br>entire text, all drawings | 1-11 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/005450**

| Patent document cited in search report | | | Publication date (day/month/year) | Patent family member(s) | | | Publication date (day/month/year) |
|---|---|---|---|---|---|---|---|
| JP | 2021-153382 | A | 30 September 2021 | (Family: none) | | | |
| JP | 2021-118604 | A | 10 August 2021 | (Family: none) | | | |
| US | 2010/0328968 | A1 | 30 December 2010 | EP | 2299580 | A2 | |
| | | | | CN | 101951152 | A | |
| US | 2018/0152112 | A1 | 31 May 2018 | WO | 2018/006960 | A1 | |
| | | | | CN | 110168893 | A | |
| US | 2020/0044572 | A1 | 06 February 2020 | EP | 3605818 | A1 | |
| | | | | FR | 3084797 | A1 | |
| | | | | CN | 110784111 | A | |
| | | | | KR | 10-2020-0014215 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108988637

- CN 111446858

**Non-patent literature cited in the description**

- **SAYED ABBAS ARSHADI.** Efficiency Improvement of Three-Phase LLC Resonant Converter Using Phase Shedding. *2017 IEEE Energy Conversion Congress and Exposition (ECCE),* 01 October 2017, https://ieeexplore.ieee.org/document/8096666

- **SAYED ABBAS ARSHADI.** Three-Phase LLC Battery Charger: Wide Regulation and Improved Light-Load Operation. *IEEE Transactions on Power Electronics,* February 2021, vol. 36 (2, https://ieeexplore.ieee.org/document/9130882